# EUROPEAN PATENT SPECIFICATION

(11) **EP 1 856 196 B1**
(45) Date of publication and mention of the grant of the patent: **15.07.2009**
(21) Application number: 06735066.0
(22) Date of filing: 15.02.2006
(51) Int. Cl.: C08J 7/04, B32B 27/32, B32B 27/36

(54) **PROTECTED POLYCARBONATE FILMS HAVING THERMAL AND UV RADIATION STABILITY, AND METHOD OF MAKING**
GESCHÜTZTE POLYCARBONATFILME MIT THERMISCHER UND UV-STRAHLUNGSSTABILITÄT SOWIE HERSTELLUNGSVERFAHREN DAFÜR
FILMS DE POLYCARBONATE PROTEGES PRESENTANT UNE STABILITE THERMIQUE ET AU RAYONNEMENT UV, ET PROCEDE DE FABRICATION

(30) Priority: 08.02.2006 US 350172; 17.02.2005 US 653781 P
(43) Date of publication of application: 21.11.2007
(73) Proprietor: Sabic Innovative Plastics IP B.V., 4612 PX Bergen op Zoom (NL)
(72) Inventor: ABELE, Wolfgang, Newburgh, Indiana 47630 (US); CARVILL, Brian, Grayslake, Illinois 60030 (US); HEALY, Michael, D., Evansville, Indiana 47712 (US); HONGLADAROM, Kwan, Mt. Vernon, Indiana 47620 (US); LAURIN, Michael, M., Pittsfield, Massachusetts 01201 (US)
(74) Representative: Carpintero Lopez, Francisco
(86) International application number: PCT/US2006/005223
(87) International publication number: WO 2006/088893

(56) References cited:
- EP-A- 1 164 005
- US-A- 4 636 438
- US-A- 5 707 704
- DATABASE WPI Section Ch, Week 199143 Derwent Publications Ltd., London, GB; Class A17, AN 1991-313955 XP002386791 & JP 03 208636 A (MITSUBISHI PETROCHEMICAL CO LTD) 11 September 1991 (1991-09-11)

## Description

### CROSS-REFERENCE TO RELATED APPLICATIONS

This application claims the benefit of U.S. Provisional Patent Application No. 60/653,781, filed February 17, 2005.

### BACKGROUND

This disclosure relates to composite films comprising polycarbonates having a protective layer laminated thereto, methods of manufacture, and uses thereof.

Releasably masked substrates are useful for applications where the masked substrate may be subject to processing operations such as cutting, rolling, collating, folding, curing, exposure to light, UV radiation, heat, pressure, and other stresses. In use, the substrate has a protective layer ("mask") applied over one or both faces, where the protective layer has properties such as mechanical toughness, abrasion resistance, and chemical or solvent resistance. The presence of the protective layer is useful in minimizing damage to the masked polymer film from dust, particles from processing, light, heat, moisture, solvents, inks, toners, contaminants and other chemicals. Polyolefins, particularly polyethylene ("PE") has been shown to be a useful protective layer.

Specific applications where the substrate to be protected is a transparent polymer film include printing applications of text or designs, wherein a pattern is applied to the transparent polymer film, cured to form a stable pattern, and the patterned film is subsequently applied to a smooth surface such as metal, painted surfaces, or glass. A polymer suitable for use in a transparent film is polycarbonate ("PC"). For example, JP03208636 discloses a laminate of a chemically-modified polycarbonate (with amide groups) and a polyolefin film (with acid or epoxy groups). US5707704 discloses a peelable vulcanized rubber masking film having at least a rubber like resin, vinyl chloride resin, and a thermoplastic resin, on a polycarbonate support. US4636438 also discloses a peelable masking layer of vinyl acetate-vinyl chloride copolymer with an aromatic polyester based urethane and a polycarbonate supporting film. EP1164005 defines a surface-protected plastic composite material comprising a transparent polycarbonate, a coating layer, a first layer stacked on the polycarbonate substrate and a thermally cured coating layer as a second layer stacked on the first layer, the coating layer being formed of a resin composition containing at least 50% by weight, based on the resin content thereof, of an acrylic resin. The thermally cured coating layer is made of an organosilane composition. In the curing of the pattern, the transparent polymer film coated with a printed pattern is subject to heat and/or ultraviolet (UV) radiation to effect cross-linking of the ink, which may also affect the adhesion of previously applied protective layers. Although masked PC substrates using various commercially available protective PE films are presently available, these materials typically have low initial and/or post-processing adhesive levels. This can result in delamination, subsequent product damage or contamination, processing yield losses, and product quality degradation as these materials are patterned, handled, and processed. Adhesive levels can also be too high, either initially or post-processing, and may manifest as productivity losses due to material damage, low quality yields, film distortion, and the like. Excessive adhesion between layers can also result in deposits of protective layer remaining on the surface of the substrate, necessitating extra processing steps to remove the PE masking from the PC substrate upon end use of an article prepared from the masked substrate.

There accordingly remains a need in the art for a removable protective layer for polycarbonate film substrates having a useful level of adhesion between the protective layer and the polycarbonate substrate layer throughout subsequent manufacturing processes. Specifically, the adhesion properties of the protective layer need retain a useful value after repeated exposure to heat and/or UV radiation from subsequent manufacturing processes, while allowing for facile removal of the protective layer.

### SUMMARY OF THE INVENTION

The above-described and other deficiencies of the art are met by a composite film comprising: a protective layer comprising an adhesion-modified polyolefin film, a coating layer according to claim 1; and a polycarbonate layer; wherein the coating layer is disposed between the protective layer and the polycarbonate layer, and the peel strength between the protective layer and the polycarbonate layer, as measured both before and after thermal treatment or a combination of thermal and UV treatment of the composite film, is about 1 to about 20 centi-Newtons per centimeter measured using 180° angle peel measured at a peel rate of 25.4 cm/min.

In another embodiment, a composite film comprises a protective layer comprising an adhesion-modified polyolefin film; a coating layer according to claim 1; and a polycarbonate layer, wherein the coating layer is disposed between the protective layer and the polycarbonate layer, and the peel strength between the protective layer and the polycarbonate layer, as measured both before and after thermal treatment or a combination of thermal and UV treatment of the composite film, is about 1 to about 20 centi-Newtons per centimeter measured using 180° angle peel measured at a peel rate of 25.4 cm/min; wherein the thermal treatment comprises exposure to about 90°C for greater than or equal to about 4 minutes, and wherein the UV treatement comprises exposure of the composite film to ultraviolet radiation at a wavelength of about 290 to about 405 nm, and at a dose of greater than or equal to about 500 millijoules per square centimeter.

In another embodiment, a method of forming a composite film comprises curing a coating composition according to claim 15 wherein the coating composition is disposed between a protective film comprising an adhesion modified polyolefin, and a polycarbonate film, wherein the composite film has a peel strength between the protective layer and the coating layer, as measured both before and after thermal treatment or a combination of thermal and UV treatment of the composite film, of about 1 to about 20 centi-Newtons per centimeter measured using 180° angle peel pull at a peel rate of 25.4 cm/min.

In another aspect, an article comprising the composite film is disclosed.

### BRIEF DESCRIPTION OF THE DRAWINGS

Figure 1 shows a composite film having a single-layer protective layer.
Figure 2 shows a composite film having a two-layer protective layer.

### DETAILED DESCRIPTION

Composite films comprising a protective layer, a substrate layer, and a coating layer disposed therebetween are disclosed, wherein the adhesion between the protective layer and the adjacent layers in the substrate remains suitable for the intended application during and after exposure to conditions similar to those encountered during manufacturing processes. The substrate film specifically comprises a polycarbonate and a coating layer, which is suited to applications of the composite film to printing, digital imaging, and other image transfer applications.

The thermoplastic composition comprises a copolymer comprising a polycarbonate. As used herein, the terms "polycarbonate" and "polycarbonate resin" mean compositions having repeating structural carbonate units of the formula (1): 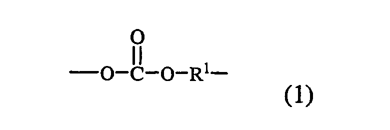 in which greater than or equal to about 60 percent of the total number of R¹ groups are aromatic organic radicals and the balance thereof are aliphatic, alicyclic, or aromatic radicals. In an embodiment, each R¹ is an aromatic organic radical. In another embodiment, each R¹ is a radical of the formula (2):

A¹-Y¹-A²- (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene. In another embodiment, Y¹ is a carbon-carbon bond (-) connecting A¹ and A².

Polycarbonates may be produced by the interfacial reaction of dihydroxy compounds having the formula HO-R¹-OH, which includes dihydroxy aromatic compounds of formula (3):

HO-A¹-Y¹-A²-OH (3)

wherein Y¹, A¹ and A² are as described above. Also included are bisphenol compounds of general formula (4): 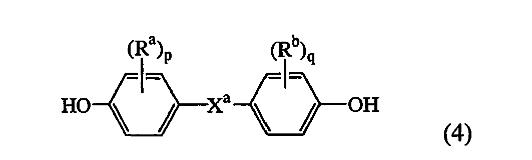 wherein R^{a} and R^{b} each represent a halogen atom or a monovalent hydrocarbon group and may be the same or different; p and q are each independently integers of 0 to 4; and X^{a} represents one of the groups of formula (5): 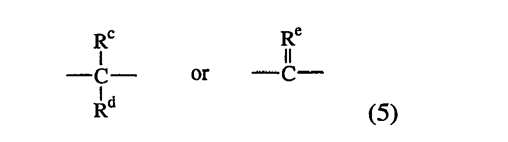 wherein R^{c} and R^{d} each independently represent a hydrogen atom or a monovalent linear alkyl or cyclic alkylene group and R^{e} is a divalent hydrocarbon group. In an embodiment, R^{c} and R^{d} represent a cyclic alkylene group; or heteroatom-containing cyclic alkylene group comprising carbon atoms, heteroatoms with a valency of two or greater, or a combination comprising at least one heteroatom and at least two carbon atoms. Suitable heteroatoms for use in the heteroatom-containing cyclic alkylene group include -0-, -S-, and -N(Z)-, where Z is a substituent group selected from hydrogen, hydroxy, C₁₋₁₂ alkyl, C₁₋₁₂ alkoxy, or C₁₋₁₂ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

Some illustrative, non-limiting examples of suitable dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxy-3 methyl phenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy compounds.

Specific examples of the types of bisphenol compounds represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl)phthalimidine, 2-phenyl-3,3-bis(4-hydroxyphenyl)phthalimidine (PPPBP), and 1,1-bis(4-hydroxy-3-methylphenyl)cyclohexane (DMBPC). Combinations comprising at least one of the foregoing dihydroxy compounds may also be used.

Suitable polycarbonates further include those derived from bisphenols containing alkyl cyclohexane units. Such bisphenols have structural units corresponding to the formula (6): 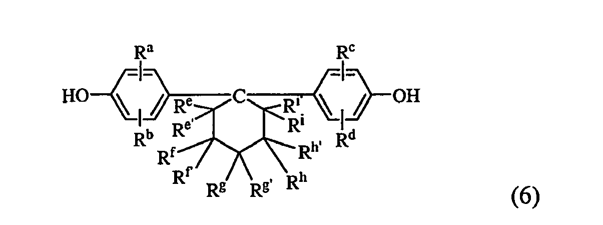 wherein R^{a}-R^{d} are each independently hydrogen, C₁₋₁₂ alkyl, or halogen; and substituents Rₑ-Rᵢ and R_{e'}-R_{i'} are each independently hydrogen or C₁₋₁₂ alkyl. The substituents may be aliphatic or aromatic, straight-chain, cyclic, bicyclic, branched, saturated, or unsaturated. In a specific embodiment, alkyl cyclohexane-containing bisphenols, for example the reaction product of two moles of a phenol with one mole of a hydrogenated isophorone, are useful for making polycarbonate polymers with high glass transition temperatures and high heat distortion temperatures. Such isophorone bisphenol-containing polycarbonates correspond to formula (6), wherein each of R_{f}, R_{f'}, and Rₕ are methyl groups; Rₑ, R_{e'}, R_{g}, R_{g'}, R_{h'}, Rᵢ, and R_{i'} are each hydrogen; and Rₐ-R_{d} are as defined above. These isophorone bisphenol based polymers, including polycarbonate copolymers made containing non-alkyl cyclohexane bisphenols and blends of alkyl cyclohexyl bisphenol containing polycarbonates with non-alkyl cyclohexyl bisphenol polycarbonates, are supplied by Bayer Co. under the APEC^{®} trade name.

Another dihydroxy aromatic group R¹ is derived from a dihydroxy aromatic compound of formula (7): 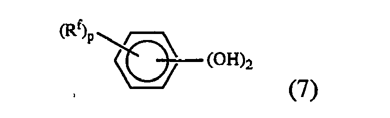 wherein each R^{f} is independently a halogen atom, a C₁₋₁₂ hydrocarbon group, or a C₁₋₁₂ halogen substituted hydrocarbon group, and p is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or a combination comprising at least one of the foregoing compounds.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and combinations of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05 to about 2.0 wt%. All types of polycarbonate end groups are contemplated as being useful in the polycarbonate composition, provided that such end groups do not significantly affect desired properties of the thermoplastic compositions.

In a specific embodiment, the polycarbonate is a linear homopolymer derived from bisphenol A, in which each of A¹ and A² is p-phenylene and Y¹ is isopropylidene. The polycarbonates may have an intrinsic viscosity, as determined in chloroform at 25°C, of about 0.3 to about 1.5 deciliters per gram (dl/g), specifically about 0.45 to about 1.0 dl/g. The polycarbonates may have a weight average molecular weight of about 10,000 to about 200,000, specifically about 20,000 to about 100,000, as measured by gel permeation chromatography.

In an embodiment, the polycarbonate has flow properties suitable for the manufacture of thin articles. Melt volume flow rate (often abbreviated MVR) measures the rate of extrusion of a thermoplastics through an orifice at a prescribed temperature and load. Polycarbonates suitable for the formation of thin articles may have an MVR, measured at 300°C under a load of 1.2 kg according to ASTM D1238-04, of about 0.4 to about 25 cubic centimeters per 10 minutes (cc/10 min), specifically about 5 to about 9 cc/10/min. Combinations of polycarbonates of different flow properties may be used to achieve the overall desired flow property.

The polycarbonate may have a light transmittance greater than or equal to 55%, specifically greater than or equal to 60% and more specifically greater than or equal to 70%, as measured at 3.2 millimeters thickness according to ASTM D1003-00. The polycarbonate may also have a haze less than or equal to 50%, specifically less than or equal to 40%, and most specifically less than or equal to 30%, as measured at 3.2 millimeters thickness according to ASTM D1003-00.

"Polycarbonates" and "polycarbonate resins" as used herein further include, in addition to homopolycarbonates, copolymers comprising different R¹ moieties in the carbonate (referred to herein as "copolycarbonates"), copolymers comprising carbonate units and other types of polymer units, such as ester units, and combinations comprising one or more of homopolycarbonates and copolycarbonates. As used herein, "combination" is inclusive of blends, mixtures, alloys, reaction products, and the like.

A specific suitable copolymer is a polyester carbonate, also known as a copolyester-polycarbonate and polyester-polycarbonate. Such copolymers further contain, in addition to recurring carbonate chain units of the formula (1), repeating units of formula (8): 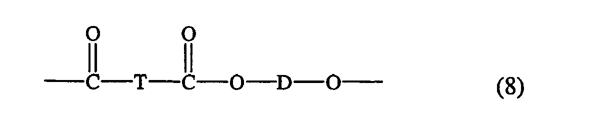 wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical.

In one embodiment, D is a C₂₋₆ alkylene radical. In another embodiment, D is derived from an aromatic dihydroxy compound of formula (4) above. In another embodiment, D is derived from an aromatic dihydroxy compound of formula (7) above.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of terephthalic acid to isophthalic acid is about 99:1 to about 1:99. In another specific embodiment, D is a C₂₋₆ alkylene radical and T is p-phenylene, m-phenylene, naphthalene, a divalent cycloaliphatic radical, or a combination thereof. This class of polyester includes the poly(alkylene terephthalates).

The polyester-polycarbonates may have a weight-averaged molecular weight (Mw) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to BPA-polycarbonate references. Samples are prepared at a concentration of about 1 mg/ml, and are eluted at a flow rate of about 1.0 ml/min.

Suitable polycarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride (phosgene), or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used. In an exemplary embodiment, an interfacial polymerization to form carbonate linkages uses phosgene, and is referred to as a phosgenation reaction.

Among the phase transfer catalysts that may be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst may be about 0.1 to about 10 wt% based on the weight of bisphenol in the phosgenation mixture. In another embodiment an effective amount of phase transfer catalyst may be about 0.5 to about 2 wt% based on the weight of bisphenol in the phosgenation mixture.

A chain stopper (also referred to as a capping agent) may be included during polymerization. The chain-stopper limits molecular weight growth rate, and so controls molecular weight in the polycarbonate. Exemplary chain-stoppers include certain mono-phenolic compounds, mono-carboxylic acid chlorides, and/or mono-chloroformates. Suitable mono-phenolic chain stoppers are exemplified by monocyclic phenols such as phenol and C₁-C₂₂ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atom may be specifically mentioned. Certain mono-phenolic UV absorbers may also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides may also be used as chain stoppers. These include monocyclic, mono-carboxylic acid chlorides such as benzoyl chloride, C₁-C₂₂ alkyl-substituted benzoyl chloride, toluoyl chloride, halogen-substituted benzoyl chloride, bromobenzoyl chloride, cinnamoyl chloride, 4-nadimidobenzoyl chloride, and mixtures thereof; polycyclic, mono-carboxylic acid chlorides such as trimellitic anhydride chloride, and naphthoyl chloride; and mixtures of monocyclic and polycyclic mono-carboxylic acid chlorides. Chlorides of aliphatic monocarboxylic acids with up to 22 carbon atoms are suitable. Functionalized chlorides of aliphatic monocarboxylic acids, such as acryloyl chloride and methacryoyl chloride, are also suitable. Also suitable are mono-chloroformates including monocyclic, mono-chloroformates, such as phenyl chloroformate, alkyl-substituted phenyl chloroformate, p-cumyl phenyl chloroformate, toluene chloroformate, and mixtures thereof.

Alternatively, melt processes may be used to make polycarbonates or polycarbonate blocks. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses, a diaryl carbonate ester having electron withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate (BMSC), bis(4-methylcarboxylphenyl) carbonate, bis(2-acetylphenyl) carboxylate, bis(4-acetylphenyl) carboxylate, or a combination comprising at least one of these. In addition, suitable transesterification catalyst for use may include phase transfer catalysts of formula (R³)₄Q⁺X above, wherein each R³, Q, and X are as defined above. Examples of suitable transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of these.

The polyester-polycarbonate resins may also be prepared by interfacial polymerization. Rather than utilizing the dicarboxylic acid per se, it is desirable to use the reactive derivatives of the acid, such as the corresponding acid halides, specifically the acid dichlorides and the acid dibromides. Thus, for example instead of using isophthalic acid, terephthalic acid, or combinations thereof, it is possible to employ isophthaloyl dichloride, terephthaloyl dichloride, and combinations thereof.

In addition to the polycarbonates described above, it is also possible to use combinations of the polycarbonate with other thermoplastic polymers, for example combinations of polycarbonates and/or polycarbonate copolymers with polyesters. Suitable polyesters comprise repeating units of formula (8), and may be, for example, poly(alkylene dicarboxylates), liquid crystalline polyesters, and polyester copolymers. It is also possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition.

In an embodiment, poly(alkylene terephthalate)s are used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters. Another polyester which can be used is the saturated poly(1,4-cyclohexanedimethylene 1,4-cyclohexanedicarboxylate) (PCCD). Polyester copolymers may include poly(ethylene terephthalate)-co-(1,4-cyclohexanedimethylene terephthalate), abbreviated as PETG where the polymer comprises greater than or equal to 50 mol% of ethylene terephthalate ester units, and abbreviated as PCTG where the polymer comprises greater than 50 mol% of 1,4-cyclohexanedimethylene terephthalate ester units.Also contemplated are the above polyesters with a minor amount, e.g., from about 0.5 to about 10 percent by weight, of units derived from an aliphatic diacid and/or an aliphatic polyol to make copolyesters.

The blends of a polycarbonate and a polyester may comprise about 1 to about 99 wt% polycarbonate and correspondingly about 99 to about 1 wt% polyester, in particular a poly(alkylene terephthalate). In an embodiment, the blend comprises about 30 to about 70 wt% polycarbonate and correspondingly about 70 to about 30 wt% polyester. The foregoing amounts are base on the total weight of the polycarbonate resin and polyester resin.

The composition may further comprises a polysiloxane-polycarbonate copolymer. The polydiorganosiloxane blocks of the copolymer comprise repeating polydiorganosiloxane units of formula (9): 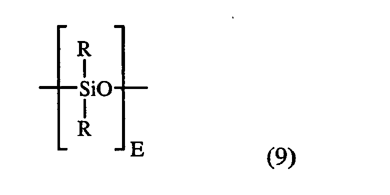 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. The foregoing groups may be fully or partially halogenated with fluorine, chlorine, bromine, or iodine, or a combination thereof. Combinations of the foregoing R groups may be used in the same copolymer.

The value of E in formula (9) may vary widely depending on the type and relative amount of each component in the thermoplastic composition, the desired properties of the composition, and like considerations. Generally, E may have an average value of 2 to about 1,000, specifically about 2 to about 500, more specifically about 5 to about 100. In an embodiment, E has an average value of about 10 to about 75, and in still another embodiment, E has an average value of about 40 to about 60. Where E is of a lower value, e.g., less than about 40, it may be desirable to use a relatively larger amount of the polycarbonate-polysiloxane copolymer. Conversely, where E is of a higher value, e.g., greater than about 40, it may be necessary to use a relatively lower amount of the polycarbonate-polysiloxane copolymer.

A combination of a first and a second (or more) polycarbonate-polysiloxane copolymers may be used, wherein the average value of E of the first copolymer is less than the average value of E of the second copolymer.

In an embodiment, the polydiorganosiloxane blocks are provided by repeating structural units of formula (10): 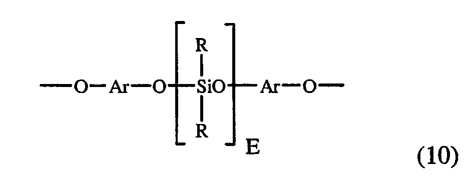 wherein E is as defined above; each R may be the same or different, and is as defined above; and Ar may be the same or different, and is a substituted or unsubstituted C₆-C₃₀ arylene radical, wherein the bonds are directly connected to an aromatic moiety. Suitable Ar groups in formula (10) may be derived from a C₆-C₃₀ dihydroxyarylene compound, for example a dihydroxyarylene compound of formula (3), (4), or (7) above. Combinations comprising at least one of the foregoing dihydroxyarylene compounds may also be used. Specific examples of suitable dihydroxyarlyene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds may also be used.

Such units may be derived from the corresponding dihydroxy compound of formula (11): 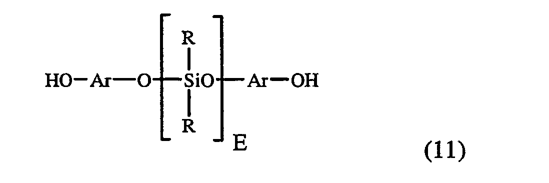 wherein Ar and E are as described above. Such compounds are further described in U.S. Patent No. 4,746,701 to Kress et al. Compounds of formula (11) may be obtained by the reaction of a dihydroxyarylene compound with, for example, an alpha, omega-bisacetoxypolydiorangonosiloxane under phase transfer conditions.

In another embodiment, polydiorganosiloxane blocks comprises units of formula (12): 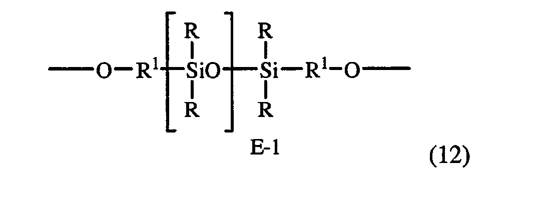 wherein R is as described above, E is 1 to 1,000, each occurrence of R¹ is independently a divalent C₁-C₃₀ organic radical, and wherein the polymerized polysiloxane unit is the reaction residue of its corresponding dihydroxy compound. In a specific embodiment, the polydiorganosiloxane blocks are provided by repeating structural units of formula (13): 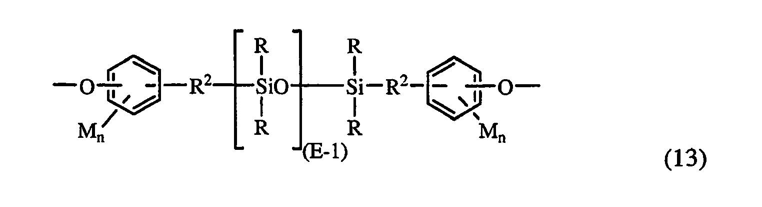 wherein R and E are as defmed above. R² in formula (12) is a divalent C₂-C₈ aliphatic group. Each M in formula (12) may be the same or different, and may be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

Units of formula (13) may be derived from the corresponding dihydroxy polydiorganosiloxane (14): 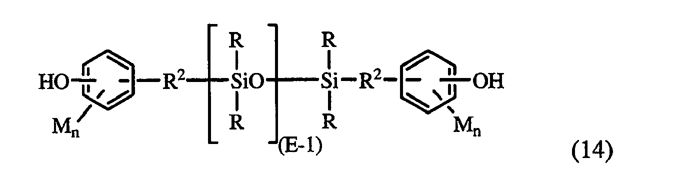 wherein R, E, M, R², and n are as described above. Such dihydroxy polysiloxanes can be made by effecting a platinum catalyzed addition between a siloxane hydride of formula (15): 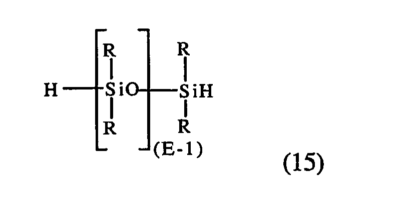 wherein R and E are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Combinations comprising at least one of the foregoing may also be used.

The polycarbonate composition may further comprise a flame retardant. Suitable flame retardants that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula (GO)₃P=O, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 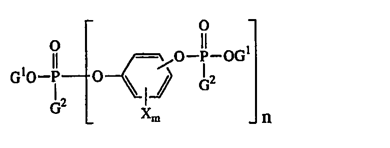 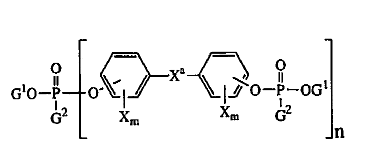 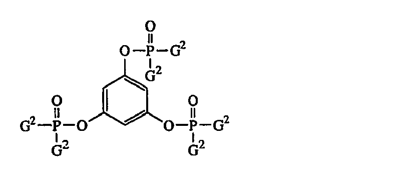 wherein each G¹ is independently a hydrocarbon having 1 to 30 carbon atoms; each G² is independently a hydrocarbon or hydrocarbonoxy having 1 to 30 carbon atoms; each X^{a} is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. When present, phosphorus-containing flame retardants can be present in amounts of 0.1 to 10 percent by weight, based on the total weight of the polycarbonate.

Halogenated materials may also be used as flame retardants, for example halogenated compounds and resins of formula (16): 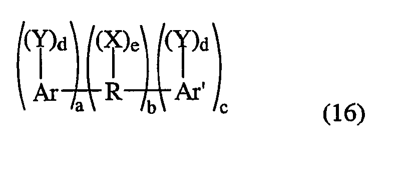 wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (16) are each independently mono- or polycarbocyclic aromatic groups such as phenylene, biphenylene, terphenylene, naphthylene, or the like.

Y is an organic, inorganic, or organometallic radical, for example: halogen, e.g., chlorine, bromine, iodine, fluorine; ether groups of the general formula OB, wherein B is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl, cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

Hydroxyl and Y substituents on the aromatic groups, Ar and Ar', can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants can be present in amounts of about 0.1 to about 10 percent by weight, based on the total weight of the polycarbonate.

Inorganic flame retardants may also be used, for example salts of C₂₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complexes such as Li₃AlF₆, BaSiF₆, KBF₄, K₃AlF₆, KAlF₄, K₂SiF₆, and/or Na₃AlF₆ or the like. When present, inorganic flame retardant salts can be present in amounts of 0.1 to 5 percent by weight, based on the total weight of the polycarbonate.

While the polycarbonate composition is of a viscosity and flow suitable for the application, it is contemplated that conventional flow promoters and plasticizers may still be desired for certain embodiments. Examples of suitable flow promoters and plasticizers include the phosphate plasticizers such as cresyl diphenyl phosphate, triphenyl phosphate, tricresyl phosphate, isopropylated and triphenyl phosphate. Terepene phenol, saturated alicyclic hydrocarbons, chlorinated biphenols, and mineral oil are also suitable. When used, plasticizers are typically employed in an amount of about 0.1 to about 10 wt % based on the weight of the polycarbonate.

The polycarbonate composition also optionally includes an anti-drip agent such as a fluoropolymer. The fluoropolymer may be a fibril forming or non-fibril forming fluoropolymer. The fluoropolymer generally used is a fibril forming polymer. In some embodiments the fluoropolymer comprises polytetrafluoroethylene. In some embodiments an encapsulated fluoropolymer may be employed, i.e. a fluoropolymer encapsulated in a polymer. An encapsulated fluoropolymer may be made by polymerizing the polymer in the presence of the fluoropolymer. Alternatively, the fluoropolymer may be pre-blended with a second polymer, such as for example, an aromatic polycarbonate resin or a styrene-acrylonitrile resin to form an agglomerated material for use as an anti-drip agent. Either method may be used to produce an encapsulated fluoropolymer.

The anti-drip agent, when present, comprises 0.1 to 5 weight percent, more specifically 0.5 to 3.0 weight percent and most specifically 1.0 to 2.5 weight percent based on the total weight of the polycarbonate.

The polycarbonate composition may further comprise a colorant. Suitable dyes include, for example, organic dyes such as coumarin 460 (blue), coumarin 6 (green), nile red or the like; lanthanide complexes; hydrocarbon and substituted hydrocarbon dyes; polycyclic aromatic hydrocarbons; scintillation dyes (preferably oxazoles and oxadiazoles); aryl- or heteroaryl-substituted poly (C₂₋₈ olefins); carbocyanine dyes; phthalocyanine dyes and pigments; oxazine dyes; carbostyryl dyes; porphyrin dyes; acridine dyes; anthraquinone dyes; arylmethane dyes; azo dyes; diazonium dyes; nitro dyes; quinone imine dyes; tetrazolium dyes; thiazole dyes; perylene dyes, perinone dyes; bis-benzoxazolylthiophene (BBOT); and xanthene dyes; fluorophores such as anti- stokes shift dyes which absorb in the near infrared wavelength and emit in the visible wavelength, or the like; luminescent dyes such as 5-amino-9-diethyliminobenzo(a)phenoxazonium perchlorate; 7-amino-4-methylcarbostyryl; 7-amino-4-methylcoumarin; 7-amino-4-trifluoromethylcoumarin; 3-(2'-benzimidazolyl)-7-N,N-diethylaminocoumarin; 3-(2'-benzothiazolyl)-7-diethylaminocoumarin; 2-(4-biphenylyl)-5-(4-t-butylphenyl)-1,3,4-oxadiazole; 2-(4-biphenylyl)-5-phenyl-1,3,4-oxadiazole; 2-(4-biphenyl)-6-phenylbenzoxazole-1,3; 2,5-Bis-(4-biphenylyl)-1,3,4-oxadiazole; 2,5-bis-(4-biphenylyl)-oxazole; 4,4'-bis-(2-butyloctyloxy)-p-quaterphenyl; p-bis(o-methylstyryl)-benzene; 5,9-diaminobenzo(a)phenoxazonium perchlorate; 4-dicyanomethylene-2-methyl-6-(p-dimethylaminostyryl)-4H-pyran; 1,1'-diethyl-2,2'-carbocyanine iodide; 1,1'-diethyl-4,4'-carbocyanine iodide; 3,3'-diethyl-4,4',5,5'-dibenzothiatricarbocyanine iodide; 1,1'-diethyl-4,4'-dicarbocyanine iodide; 1,1'-diethyl-2,2'-dicarbocyanine iodide; 3,3'-diethyl-9,11 -neopentylenethiatricarbocyanine iodide; 1,3'-diethyl-4,2'-quinolyloxacarbocyanine iodide; 1,3'-diethyl-4,2'-quinolylthiacarbocyanine iodide; 3-diethylamino-7-diethyliminophenoxazonium perchlorate; 7-diethylamino-4-methylcoumarin; 7-diethylamino-4-trifluoromethylcoumarin; 7-diethylaminocoumarin; 3,3'-diethyloxadicarbocyanine iodide; 3,3'-diethylthiacarbocyanine iodide; 3,3'-diethylthiadicarbocyanine iodide; 3,3'-diethylthiatricarbocyanine iodide; 4,6-dimethyl-7-ethylaminocoumarin; 2,2'-dimethyl-p-quaterphenyl; 2,2-dimethyl-p-terphenyl; 7-dimethylamino-1 -methyl-4-methoxy-8-azaquinolone-2; 7-dimethylamino-4-methylquinolone-2; 7-dimethylamino-4-trifluoromethylcoumarin; 2-(4-(4-dimethylaminophenyl)-1,3-butadienyl)-3-ethylbenzothiazolium perchlorate; 2-(6-(p-dimethylaminophenyl)-2,4-neopentylene-1,3,5-hexatrienyl)-3- methylbenzothiazolium perchlorate; 2-(4-(p-dimethylaminophenyl)-1,3-butadienyl)-1,3,3-trimethyl-3H-indolium perchlorate; 3,3'-dimethyloxatricarbocyanine iodide; 2,5-diphenylfuran; 2,5-diphenyloxazole; 4,4'-diphenylstilbene; 1-ethyl-4-(4-(p-dimethylaminophenyl)-1,3-butadienyl)-pyridinium perchlorate; 1-ethyl-2-(4-(p-dimethylaminophenyl)-1,3-butadienyl)-pyridinium perchlorate; 1-Ethyl-4-(4-(p-dimethylaminophenyl)-1,3-butadienyl)-quinolium perchlorate; 3-ethylamino-7-ethylimino-2,8-dimethylphenoxazin-5-ium perchlorate; 9-ethylamino-5-ethylamino-10-methyl-5H-benzo(a) phenoxazonium perchlorate; 7-ethylamino-6-methyl-4-trifluoromethylcoumarin; 7-ethylamino-4-trifluoromethylcoumarin; 1,1',3,3,3',3'-hexamethyl-4,4',5,5'-dibenzo-2,2'-indotricarboccyanine iodide; 1,1',3,3,3',3'-hexamethylindodicarbocyanine iodide; 1,1',3,3,3',3'-hexamethylindotricarbocyanine iodide; 2-methyl-5-t-butyl-p-quaterphenyl; N-methyl-4-trifluoromethylpiperidino-<3,2-g>coumarin; 3-(2'-N-methylbenzimidazolyl)-7-N,N-diethylaminocoumarin; 2-(1 -naphthyl)-5-phenyloxazole; 2,2'-p-phenylen-bis(5-phenyloxazole); 3,5,3"",5""-tetra-t-butyl-p-sexiphenyl; 3,5,3"",5""-tetra-t-butyl-p-quinquephenyl; 2,3,5,6-1H,4H-tetrahydro-9-acetylquinolizino-<9,9a,1-gh>coumarin; 2,3,5,6-1H,4H-tetrahydro-9-carboethoxyquinolizino-<9,9a,1-gh> coumarin; 2,3,5,6-1H,4H-tetrahydro-8-methylquinolizino-<9,9a, 1-gh> coumarin; 2,3,5,6-1H,4H-tetrahydro-9-(3-pyridyl)-quinolizino-<9,9a,1-gh> coumarin; 2,3,5,6-1H,4H-tetrahydro-8-trifluoromethylquinolizino-<9,9a,1-gh> coumarin; 2,3,5,6-1H,4H-tetrahydroquinolizino-<9,9a,1-gh>coumarin; 3,3',2",3"'-tetramethyl-p-quaterphenyl; 2,5,2"",5"'-tetramethyl-p-quinquephenyl; P-terphenyl; P-quaterphenyl; nile red; rhodamine 700; oxazine 750; rhodamine 800; IR 125; IR 144; IR 140; IR 132; IR 26; IR5; diphenylhexatriene; diphenylbutadiene; tetraphenylbutadiene; naphthalene; anthracene; 9,10-diphenylanthracene; pyrene; chrysene; rubrene; coronene; phenanthrene or the like, or a combination comprising at least one of the foregoing dyes.

Suitable colorants include, for example titanium dioxide, anthraquinones, perylenes, perinones, indanthrones, quinacridones, xanthenes, oxazines, oxazolines, thioxanthenes, indigoids, thioindigoids, naphtalimides, cyanines, xanthenes, methines, lactones, coumarins, bis-benzoxaxolylthiophenes (BBOT), napthalenetetracarboxylic derivatives, monoazo and disazo pigments, triarylmethanes, aminoketones, bis(styryl)biphenyl derivatives, and the like, as well as combinations comprising at least one of the foregoing colorants. Dyes are generally used in amounts of about 0.01 to about 5 wt%, based on the total weight of the polycarbonate.

The polycarbonate film may also comprise an antistatic agent. The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat^{®} 6321 (Sanyo) or Pebax^{®} MH1657 (Atofina), Irgastat^{®} P18 and P22 (Ciba-Geigy). Other polymeric materials that may be used as antistatic agents are inherently conducting polymers such as polyaniline (commercially available as PANIPOL^{®}EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative. Antistatic agents can be used in amounts of 0.0001 to 5 percent by weight, based on the total weight of the polycarbonate.

The polycarbonate compositions for use in preparing polycarbonate films may be manufactured by methods generally available in the art. For example, in an embodiment, a powdered polycarbonate resin and any other components are first blended in a HENSCHEL-Mixer^{®} high speed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestuffer. Such additives may also be compounded into a masterbatch with a desired polymeric resin and fed into the extruder. The additives may be added to the polycarbonate base material to make a concentrate, before this is added to the final product. The extruder is generally operated at a temperature higher than that necessary to cause the composition to flow, typically about 260 to about 350°C. The extrudate is immediately quenched in a water batch and pelletized. The pellets, prepared by cutting the extrudate, may be about one-fourth inch long or less as desired. Such pellets may be used for subsequent extrusion, casting, molding, shaping, or forming of a polycarbonate film. The polycarbonate film may have a thickness of about 25 to about 1,270 micrometers, specifically about 127 to about 760 micrometers.

The composite film further comprises a protective layer. In an advantageous feature, the protective layer comprises a film comprising an adhesion-modified polyolefin that is effective to provide the desired level of adhesion and adhesion stability during use. The adhesion-modified polyolefin may be used alone or in combination (e.g., as a blend) with another polyolefin to form the film. The protective layer may further comprise an additional film, for example an unmodified polyolefin or other type of protective film, in combination with the adhesion-modified polyolefin film.

The adhesion-modified polyolefin may be obtained by copolymerization of an adhesion-improving comonomer with a C₂₋₁₈ olefin, for example ethylene, propylene, or a combination of ethylene and propylene. A specific monomer is ethylene. As used herein an "adhesion improving monomer" is a monomer that is copolymerizable with a C₂₋₁₈ olefin and which is useful for adjusting the adhesion of the protective layer to the substrate to an appropriate level and increase the stability of the adhesion during use. Suitable comonomers include, for example, alkenyl esters such as vinyl esters of C₁-C₃₆ linear or branched aliphatic carboxylic acids, cyclic aliphatic acids, aryl containing acids, or combinations of one or more of the foregoing types of acids. Examples of suitable vinyl esters include but are not limited to vinyl acetate, vinyl propionate, vinyl butyrate, vinyl pivalate, vinyl 2-ethylhexanoate, vinyl versalate, and the like. Combinations comprising one or more of these may be used. The vinyl ester monomer may be present in the adhesion modified polyolefin copolymer an amount of about 2 to about 20 wt%, specifically about 7 to about 10 wt% of the monomer charge.

Additional copolymerizable monomers may be used to form the adhesion-modified polyolefin. Such monomers may include vinyl ethers, vinyl halides, vinyl alcohols, ethylenically unsaturated carboxylic acids such as acrylic acids and methacrylic acids, acrylamide, acrylonitrile, cyclic olefins, for example cyclohexenes, norbornenes, cyclopentadiene, and cyclopentadiene derivatives, dienes such as butadiene and isoprene, vinyl aromatic monomers such as styrene, alpha-methylstyrene, 3- and 4-acetoxystyrenes, 4-alkoxystyrenes (including 4-methoxystyrene and 4-t-butoxystyrene), and the like, or combination comprising at least one of the foregoing comonomers. Additional monomer may be present in the adhesion modified polyolefin copolymer an amount of about 1 to about 50 wt%, specifically about 2 to about 20 wt% of the monomer charge.

Any suitable method known for the formation of polyolefin copolymers may be used to provide the adhesion-modified polyolefins. Specifically suitable polymerization methods for preparing adhesion modified polyolefins include radical polymerization methods for the preparation of random copolymers of the adhesion modified polyolefin.

As stated above, the adhesion-modified polyolefins may be used in combination with unmodified polyolefins, for example in the form of a blend or laminated to a film of an unmodified polyolefin. Suitable unmodified polyolefins include homopolymers and copolymers of C₂₋₁₈ olefins. In an embodiment, the unmodified polyolefin may be a polyethylene, polypropylene, or ethylene-propylene copolymer. The unmodified polyolefins may be predominantly branched or linear, having a low degree of crystallinity and low density. Low density polyolefins, such as low density polyethylene, prepared using standard olefin polymerization techniques, such as radical polymerization or using Ziegler-Natta olefin polymerization catalysts, are suitable. Also suitable are polyolefins having a controlled branching structure, which conveys a greater dimensional stability and greater shear resistance in the polymer, and which may be processed or extruded to form thinner layers without loss of film integrity. Suitable polyolefins of this type include linear low density polyolefins, prepared using a single-site activation metallocene catalysts derived from transition metals such as zirconium, titanium, hafnium, and the like. A specific example of a suitable polymer is a linear low density polyethylene (LLDPE). In a specific embodiment, polyethylene, more specifically polyethylene having a melt volume rate (MVR) according to ASTM D1238-04 of about 0.1 to about 8 cc/10 min, and a density of about 0.91 to about 0.94 g/cm³ may be used.

When a combination of a polyolefin and an adhesion-modified polyolefin is used to form the protective film, the adhesion modified polyolefin can be present in an amount from about 40 to about 90 wt%, specifically about 45 to about 85 wt% based on the amount of unmodified polyolefin. Conversely, the amount of unmodified polyolefin can be from about 10 to about 60 wt%, specifically about 15 to about 55 wt% based on the weight of the adhesion modified polyolefin.

Other adhesion promoting additives, for example tackifiers, may be added to the adhesion-modified polyolefin protective film. The addition of a tackifier increases the adhesive force between layers. Tackifiers generally have a relatively low molecular mass, typically about 200 to about 2,000 g/mol, with a wide molecular mass distribution and a glass transition temperature (Tg) above that of an elastomer. The softening point of tackifiers is typically about 50 to about 150°C.

Suitable tackifiers may include terpene oligomers, cumarone indene resins, aliphatic petrochemical resins, and modified phenol resins. Terpene tackifiers are prepared by polymerization, particularly cationic polymerization of naturally occurring terpenes such as the pinenes, limonenes and the like. Aliphatic petrochemical resins are generally obtained by oligomerization of petroleum fractions, specifically hydrogenated fractions. Examples include hydrogenated hydrocarbon resins based on polymerizable C₉ olefinic hydrocarbons (obtained from petroleum distillation fractions), copolymerized with a second monomer such as indene, alpha-methylstyrene, or vinyl toluene. Hydrogenated hydrocarbon resin based on polymerized cyclopentadiene that is subsequently hydrogenated may also be suitable.

The tackifier, when present in the protective film, is used in an amount of about 0.5 to about 20 wt%, specifically about 2 to about 20 wt%, relative to the weight percentage of the adhesion modified polyolefin or the combination of adhesion modified polyolefin and unmodified polyolefin. Likewise, the adhesion modified polyolefin or combination of adhesion modified polyolefin and unmodified polyolefin are used in an amount of about 80 to about 99.5 wt% relative to the tackifier.

In an embodiment, the protective layer comprises a film comprising the adhesion-modified polyolefin, optionally together with a tackifier. The film may further comprise an unmodified polyolefin (with or without a tackifier). The thickness of this film may be about 5 to about 40 micrometers, specifically about 10 to about 30 micrometers.

In another embodiment, one of the foregoing films is used together with a second film comprising an unmodified polyolefin, with or without a tackifier. Additional film layers may also be present, provided that at least one face of the adhesion-modified film is exposed. For example, one or more layers may be disposed between the first and second film. The thickness of this second film and any additional films may be about 20 to about 150 micrometers. Multi-layered protective layers may be produced by coextrusion of the films using a flat or annular die. The total film thickness for a multi-layered protective layer may be about 25 to about 190 micrometers, specifically about 30 to about 150 micrometers. For example, suitable adhesion-modified polyolefin protective layers having a thickness of about 50 micrometers, and having the desired adhesive properties, include polyethylene (PE) masking GHX 173 R and GHX 174 A, both available from Bischof and Klein GmbH of Lengerich, Germany.

The composite film further comprises a coating layer, which is disposed between the protective layer and the polycarbonate film. The coating layer is derived from a coating composition comprising a crosslinkable compound, an initiator, and a binder, which is cured to form the crosslinked coating layer using light, heat, pressure, or a combination comprising at least one of the foregoing cure mechanisms.

The crosslinking compounds comprising the coating layer may crosslink using a variety of different reaction mechanisms, including free radical, acid catalyzed, or thermally initiated, and thus may have a variety of reactive groups for accomplishing the crosslinking reaction. Crosslinking reactive groups are (meth)acrylates.

A suitable acryloyl-containing compound is a polyfunctional (meth)acryloyl compound comprising at least two (meth)acryloyl moieties having the structure of formula (18): 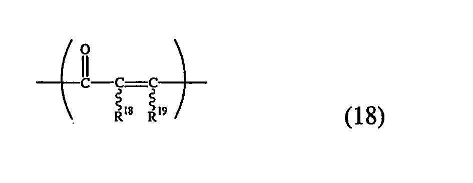 wherein R¹⁸ and R¹⁹ are each independently hydrogen, C₁-C₁₂ alkyl, or the like; and wherein R¹⁸ and R¹⁹ may be disposed either *cis* or *trans* about the carbon-carbon double bond. Preferably, R¹⁸ and R¹⁹ are each independently hydrogen or methyl. Specifically, the polyfunctional (meth)acryloyl compound comprises at least two (meth)acryloyl moieties having the structure of formula (19): 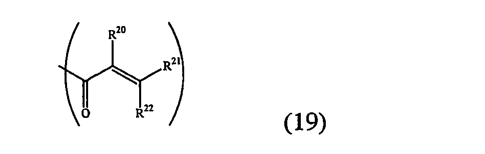 wherein R²⁰-R²² are each independently hydrogen, C₁-C₁₂ alkyl, C₂-C₁₂ alkenyl, C₆-C₁₈ aryl, C₇-C₁₈ alkyl-substituted aryl, C₇-C₁₈ aryl-substituted alkyl, C₂-C₁₂ alkoxycarbonyl, C₇-C₁₈ aryloxycarbonyl, C₈-C₁₈ alkyl-substituted aryloxycarbonyl, C₈-C₁₈ aryl-substituted alkoxycarbonyl, nitrile, formyl, carboxylate, imidate, thiocarboxylate, or the like. Preferably, R²⁰-R²² are each independently hydrogen or methyl.

Suitable polyfunctional (meth)acryloyl compounds include, for example, unsaturated polyester resins that are the polycondensation reaction product of one or more dihydric alcohols and one or more ethylenically unsaturated polycarboxylic acids. By polycarboxylic acid is meant polycarboxylic or dicarboxylic acids or anhydrides, polycarboxylic or dicarboxylic acid halides, and polycarboxylic or dicarboxylic esters. For example, suitable unsaturated polycarboxylic acids, and corresponding anhydrides and acid halides that contain polymerizable carbon-to-carbon double bonds, may include maleic anhydride, maleic acid, and fumaric acid. A minor proportion of the unsaturated acid, up to about 40 mole percent, may be replaced by dicarboxylic or polycarboxylic acid that does not contain a polymerizable carbon-to-carbon bond. Examples thereof include the acids (and corresponding anhydrides and acid halides): phthalic, isophthalic, terephthalic, succinic, adipic, sebasic, methylsuccinic, and the like. Dihydric alcohols that are useful in preparing the polyesters include, for example, 1,2-propanediol (hereinafter referred to as propylene glycol), dipropylene glycol, diethylene glycol, 1,3-butanediol, ethylene glycol, glycerol, and the like. Examples of suitable unsaturated polyesters are the polycondensation products of propylene glycol and maleic and/or fumaric acids; 1,3-butanediol and maleic and/or fumaric acids; combinations of ethylene and propylene glycols (approximately 50 mole percent or less of ethylene glycol) and maleic and/or fumaric acids; propylene glycol, maleic and/or fumaric acids and dicyclopentadiene reacted with water; and the like; and combinations comprising at least one of the foregoing polyfunctional (meth)acryloyl monomers. In addition to the above described polyesters, dicyclopentadiene-modified unsaturated polyester resins such as those described in U.S. Pat. No. 3,883,612 to Pratt et al. may be used. The molecular weight of the polymerizable unsaturated polyester may vary over a considerable range, but ordinarily useful polyesters have a number average molecular weight of about 300 to about 5,000, and more specifically about 500 to about 5,000.

Suitable crosslinkable compounds may be difunctional, trifunctional, tetrafunctional, or pentafunctional (meth)acryloyl compounds. For example, difunctional compounds may be produced by condensation of an acrylic or methacrylic acid with a diol under esterification conditions, or condensed with a di-epoxide, such as bisphenol-A diglycidyl ether, butanediol diglycidyl ether, or neopenylene glycol dimethacrylate. Specific examples of difunctional compounds prepared this way include 1,4-butanediol diglycidylether di(meth)acrylate, bisphenol A diglycidylether dimethacrylate, and neopentylglycol diglycidylether di(meth)acrylate, and the like. Also included as polyfunctional (meth)acryloyl monomers are the condensation of reactive acrylate or methacrylate compounds with alcohols or amines to produce the resulting polyfunctional (meth)acrylates or polyfunctional (meth)acrylamides, respectively. Examples of these include N,N-bis(2-hydroxyethyl)(meth)acrylamide, methylenebis((meth)acrylamide), 1,6-hexamethylenebis((meth)acrylamide), diethylenetriamine tris((meth)acrylamide), bis(gamma-((meth)acrylamide)propoxy) ethane, beta-((meth)acrylamide) ethylacrylate, ethylene glycol di(meth)acrylate, diethylene glycol di(meth)acrylate, tetraethylene glycol di(meth)acrylate, glycerol di(meth)acrylate, glycerol tri(meth)acrylate, 1,3-propylene glycol di(meth)acrylate, dipropyleneglycol di(meth)acrylate, 1,4-butanediol di(meth)acrylate, 1,2,4-butanetriol tri(meth)acrylate, 1,6-hexanedioldi(meth)acrylate, 1,4-cyclohexanediol di(meth)acrylate, 1,4-benzenediol di(meth)acrylate, pentaerythritoltetra(meth)acrylate, 1,5-pentanediol di(meth)acrylate, 1,8-octanediol diacrylate, 1,9-nonanediol di(meth)acrylate, 1,10-decanediol di(meth)acrylate, 1,11-undecanediol di(meth)acrylate, 1,12-dodecanediol di(meth)acrylate, pentaerythritol tri(meth)acrylate, pentaerythritol tetra(meth)acrylate, dipentaerythritol tetra(meth)acrylate, dipentaerythritol penta(meth)acrylate, diethylene glycol di(meth)acrylate, triethylene glycol di(meth)acrylate, trimethylolpropane di(meth)acrylate, trimethylolpropane tri(meth)acrylate), 1,3,5-triacryloylhexahydro-1,3,5-triazine, 2,2-bis(4-(2-(meth)acryloxyethoxy)phenyl)propane, 2,2-bis(4-(2-(meth)acryloxyethoxy)-3,5-dibromophenyl)propane, 2,2-bis((4-(meth)acryloxy)phenyl)propane, 2,2-bis((4-(meth)acryloxy)-3,5-dibromophenyl)propane, and the like, and combinations comprising at least one of the foregoing polyfunctional (meth)acryloyl monomers. It will be understood that the suffix (meth)acryl- denotes either acryl- or methacryl-. In an embodiment, one or more acrylate crosslinkable compounds having a high reactivity are used.

The curable, ethylenically unsaturated, crosslinkable coating compositions described above further comprise a polymerization initiator to promote polymerization of the curable components. Suitable polymerization initiators include photoinitiators that promote polymerization of the components upon exposure to ultraviolet radiation. Particularly suitable photoinitiators include phosphine oxide photoinitiators. Examples of such photoinitiators include the IRGACURE^{®} and DAROCUR^{®} series of phosphine oxide photoinitiators available from Ciba Specialty Chemicals; the LUCIRIN^{®} series from BASF Corp.; and the ESACURE^{®} series of photoinitiators available from Lamberti. Other useful photoinitiators include ketone-based photoinitiators, such as hydroxyalkyl phenyl ketones and alkoxyalkyl phenyl ketones, and thioalkylphenyl morpholinoalkyl ketones. Also suitable are benzoin ether photoinitiators. Combinations of the foregoing photoinitiators may be used. A specific suitable initiator is diethoxy acetophenone.

The polymerization initiator may include peroxy-based initiators that promote polymerization under thermal activation. Examples of useful peroxy initiators include, for example, benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy) isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilylphenyltriphenylsilyl peroxide, and the like, and combination comprising at least one of the foregoing.

The polymerization initiator is used in an amount of about 0.01 to about 10 wt%, specifically about 0.1 to about 5 wt%, based on the total weight of the crosslinkable compound, initiator, and binder.

The coating composition also comprises a binder for use in controlling the flow and distribution properties of the coating composition, and which may act as a viscosity modifier. Suitable binder materials include modified and unmodified polysaccharide based materials such as celluloses, starch, dextrins, lignocelluloses, and the like, and may be modified to adjust the viscosity, polarity, solubility, and other properties by esterification of the hydroxyl groups on the base material using a reactive C₂₋₃₀ carboxylic acid derivative, to provide the esterified binder. Particularly useful carboxylic acids include those having fewer than 8 carbons, suitable examples of which include acetic acid, propionic acid, butyric acid, isobutyric acid, a combination comprising at least one of the foregoing carboxylic acids, and derivatives thereof. In an exemplary embodiment, useful ester-modified binder materials for the coating composition include cellulose acetate and cellulose acetate butyrate. The binder is present in the coating composition in an amount of about 1 to about 25 wt%, specifically about 2 to about 15 wt% of the total weight of the crosslinkable compound, initiator, and binder.

The coating composition comprises a combination comprising two or more polyfunctional crosslinkable compounds. The coating composition comprises a combination of difunctional, trifunctional, and tetrafunctional and/or pentafunctional (meth)acrylate crosslinkable compounds, in which the difunctional crosslinkable compound is present in an amount of about 20 to about 60 wt%, specifically about 25 to about 50 wt%; the trifunctional crosslinkable compound is present in an amount of about 20 to about 60 wt%, specifically about 25 to about 50 wt%; the tetrafunctional and/or pentafunctional crosslinkable compounds is present in a total amount of about 12 to about 30 wt%, specifically about 15 to about 25 wt%; where the amounts of each of these is based on the combined weights of the difunctional, trifunctional, and tetrafunctional and/or pentafunctional (meth)acrylate crosslinkable compounds, the initiator, and the binder. An example of such a coating composition is described in U.S. Pat. No. 5,455,105 to Coyle et al.

The composite film is prepared by layering a polycarbonate film with a protective layer, and providing a suitable adhesive bond between these by disposing therebetween the coating composition, and curing the coating composition to form a coating layer. The layered film may be prepared by lamination of the polycarbonate and protective films subsequent to the application of a layer of the coating composition to one or more faces of the films to be adhered together. Application of the coating composition to form a coating layer may be accomplished by spray coating, layering, wiping, dipping, or other mechanical means of creating a thin, uniform film of the coating composition to the polycarbonate and/or protective layer surface. In a specific embodiment, the coating composition is applied to the polycarbonate film and initiated to form crosslinks. In another embodiment, the coating composition is applied to a carrier layer and is partially or fully cured, and is then applied to the polycarbonate film. The polycarbonate film, coating layer, and protective film are then layered together to form an uncured composite film. In an embodiment, the polycarbonate film, coating layer, and protective film are laminated together with a pressure roller. Heat and/or light is applied to further cure the coating composition. The resulting composite film, having a protective layer, polycarbonate layer and coating layer disposed between, is collected and spooled. The coating layer has a thickness of about 1 to about 130 micrometers, specifically about 1.5 to about 20 micrometers, and still more specifically about 2 to about 5 micrometers.

An additional, second protective film having a lower degree of adhesion may also be applied to the polycarbonate layer, on the surface opposite the surface having the coating layer and protective layer, where the applying may be performed simultaneously with the formation of the composite film. This second protective film is useful to protect the non-masked face of the polycarbonate film during storage, transport, and handling, and is removed prior to further processing of the composite film, such as during the application of inks or other imaging chemicals at the customer. The composite film may be shaped by cutting, drilling, folding, layering, and other such shaping and forming operations, to create a shape and size suitable for storage, transportation, handling, and further processing.

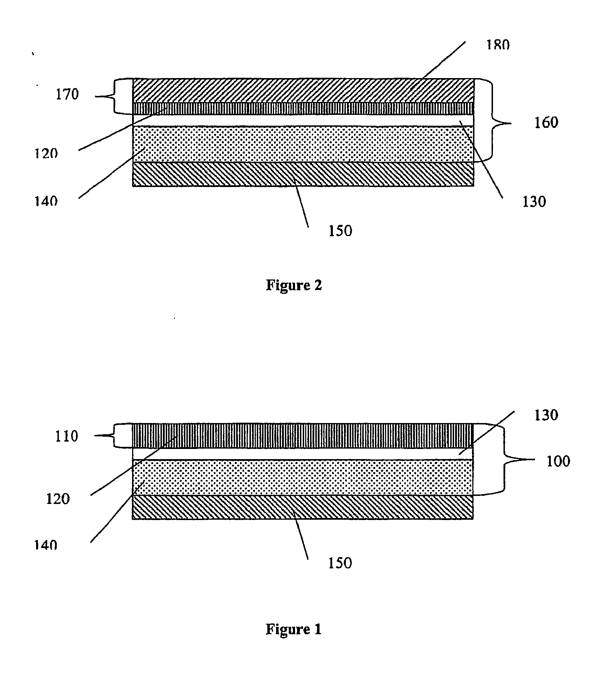

An exemplary embodiment of the composite film is shown in Figure 1. Figure 1 depicts a composite film 100 having a protective layer 110 comprising the adhesion modified polyolefin 120, a coating layer 130, and a polycarbonate layer 140. The coating layer 130 is disposed between the protective layer 110 and polycarbonate layer 140. As used herein, "disposed between" means in at least partial contact with. A second protective layer 150 may be adhered to the face of the polycarbonate layer opposite the coating layer. This second protective layer 150 is removed by the customer prior to manufacturing steps to expose a surface where additional layers or coatings of inks, adhesives, protective coatings, and the like are applied. The second protective layer is not subject to manufacturing processes involving heat or light which can affect the adhesion of the layers.

A second exemplary embodiment of the composite film is shown in Figure 2. Figure 2 depicts a composite film 160 having a protective layer 170 comprising a layer comprising the adhesion modified polyolefin 120, an outer layer of the protective layer 180 comprising an unmodified polyolefin, a coating layer 130, and a polycarbonate layer 140. The coating layer 130 is disposed between the protective layer 170 and polycarbonate layer 140. A second protective film 150 may be applied to a face of the polycarbonate layer opposite the coating layer, and is removed by the customer prior to manufacturing processes to expose a surface where additional layers or coatings of inks, adhesives, protective coatings, and the like, are applied.

After processing in a manufacturing operation, the protective layer (as seen above, 100 in Figure 1, and 160 in Figure 2) is removable in an end use application step. It is generally desired that the protective layer remain adhered to the coating layer and polycarbonate layer for the duration of the processing, until such time as processing is completed and the protective layer may be removed. Excessive adhesion between the protective layer and the polycarbonate film is undesirable, as it may lead to surface finish marring, deposits of coating layer remaining, tearing, stretching, or other defects. Conversely, inadequate adhesion between the protective layer and the polycarbonate film can cause premature delamination during processing after exposure to mechanical stresses, heat, cold, radiation, moisture, solvent, or other stresses, with similar effect. Either of excess adhesion or inadequate adhesion may manifest as a result of treatment of the composite film under conditions of heat and radiation. For example, the film may be exposed to one or more thermal treatments of about 65 to 93°C for about 4 to about 240 minutes, UV light exposure of 500 millijoules per square centimeter (mJ/cm²) at a wavelength of about 290 to about 405 nm, or a combination of these. The number of such treatments of each of these conditions can be as many as 10, or possibly more depending on the application. The cumulative effect of exposure to these conditions can effect chemical or physical changes that can in turn affect adhesion properties of the protective layer and/or the adjacent coating layer.

It has been unexpectedly found that adhering the protective layer to a polycarbonate layer using a coating layer disposed therebetween provides a suitable level of adhesion when the protective layer comprises an adhesion modified polyolefin as described above. Still more surprisingly, the adhesion between the protective layer and the coating layer remains suitable for use during and after exposure to conditions, such as heat, UV radiation, or a combination of heat and UV radiation, which are known to affect adhesion between layers. Adhesion outside of a suitable set of values has been found after exposure of comparative composite films to heat and/or UV radiation, where the comparative composite films comprise polycarbonate films and protective films adhered together without use of both a coating layer and a protective layer comprising an adhesion-modified polyolefin.

In an embodiment, the composite film has an adhesion between the protective layer and the polycarbonate layer of about 1.0 to about 40 centi-Newtons per centimeter (cN/cm), both before and after treating thermally at greater than or equal to about 90°C for greater than or equal to about 4 minutes, both before and after treating photolytically by exposing the composite film UV radiation at a wavelength of about 290 to about 405 nm at an exposure dose of greater than or equal to about 500 mJ/cm², or both before and after treating using a combination of these, and as measured using a 180 degree peel pull test of a 2.54 cm wide strip at a pull rate of 25.4 cm/min. In a specific embodiment, the composite film has an adhesion between the protective layer and the polycarbonate layer of about 1 to about 20 centi-Newtons per centimeter (cN/cm), specifically about 1.5 to about 15 cN/cm, and more specifically about 2 to about 10 cN/cm, both before and after treating thermally at greater than or equal to about 90°C for greater than or equal to about 4 minutes, both before and after treating photolytically by exposing the composite film UV radiation at a wavelength of about 290 to about 405 nm at an exposure dose of greater than or equal to about 500 mJ/cm², or both before and after treating using a combination of these, and as measured using a 180 degree peel pull test of a 2.54 cm wide strip at a pull rate of 25.4 cm/min. These values represent useful measures of adhesion for mask processing and manufacturing purposes.

The composite film has an acceptably flat edge when laid out upon a flat surface. Edge flatness may be compromised during processing of the composite film due to exacerbation of differences in physical properties of adjacent layers by exposure to processing conditions. Changes in properties such as solvent swellability, moisture absorbance, coefficients of thermal expansion, and/or dimensional changes of the layers during processing may affect the flatness of the masked polymer film. Film flatness, particularly at the edges where poor flatness manifests as edge curl, is highly desirable, so as to avoid difficulties in manufacturing and processing step, and to allow for a smooth application to a surface. Excessive edge curl may result in decreased process yield, defective product, longer cycle times, increased down time for processing equipment, and higher maintenance costs.

It is believed that the use of a coating composition having a low degree of dimensional change, along the x, y, and z axes, upon cure to form a coating layer minimizes the degree of curl at the edges of the composite film. A minimum amount of dimensional change upon curing may be less than about 5%, specifically less than about 3%, more specifically less than about 2% along the axis corresponding to the processing flow direction for the film. In an embodiment, the degree of curl at the edge of a sample of the composite film comprising a 250 micrometer thick polycarbonate film is less than or equal to about 3.0 cm, specifically less than or equal to about 2.8 cm, and more specifically less than or equal to about 2.5 cm, both before and after treating thermally at greater than or equal to about 90°C for greater than or equal to about 4 minutes, both before and after treating photolytically by exposing the composite film UV radiation at a wavelength of about 290 to about 405 nm at an exposure dose of greater than or equal to about 500 mJ/cm², or both before and after treating using a combination of these. Similarly, the degree of curl at the edge of a sample of the composite film comprising a 38 micrometer thick polycarbonate film is less than or equal to about 1 cm, specifically less than or equal to about 0.9 cm, and more specifically less than or equal to about 0.75 cm both before and after treating thermally at greater than or equal to about 90°C for greater than or equal to about 4 minutes, both before and after treating photolytically by exposing the composite film UV radiation at a wavelength of about 290 to about 405 nm at an exposure dose of greater than or equal to about 500 mJ/cm², or both before and after treating using a combination of these.

The composite films as described above are specifically useful in the printing and digital imaging industries. The composite films are resistant to changes in the adhesive properties between layers as a result of mechanical stresses by processing as described above, or exposure to heat, UV radiation, moisture, or chemicals in the form of inks, dyes, toners, paints, and other imaging chemicals, as well as sources of light and heat for the purpose of drying and curing the inks and other crosslinkable applied materials.

In a representative set of processing conditions for manufacturing a printed article, a sheet of the composite film having an exposed face of the polycarbonate substrate is coated on the exposed face of the polycarbonate substrate with a solvent ink and oven cured for less than or equal to about 4 hours at about 65°C. A first UV curable ink is applied to the cured solvent ink surface, and the ink is crosslinked with UV radiation a wavelength of about 290 to about 405 nm at an exposure dose about 500 mJ/cm². A second UV curable ink may be applied over the first, and the UV crosslinking process repeated, with as many as 10 such application/crosslink cycles performed. A layer of an adhesive is applied to the surface having the crosslinked ink layers, and the resulting film is dried in an oven at about 93°C for about 5 minutes. A release layer is applied to the dried coating layer, and the resulting article is cut to the desired size and shape for use in a commercial application. Use of the article by a secondary customer comprises removing the release layer to expose the adhesive, applying the adhesive side of the article to a substrate such as a glass window or painted surface, and removing the protective layer to expose the coating layer and polycarbonate surface.

Articles that may be prepared using the composite films include transparent printed sheets, rolls, and designs for application to solid surfaces such as opaque, transparent or translucent materials such as glass windows for commercial and residential use, automotive windshield glass, automotive dash boards, flex membrane and rigid surfaces, displays for appliances, labeling for identification of controls for mechanical and electrical operated machines, equipment, and the like.

The above properties are further illustrated by the following examples.

Peel strength was determined according to the following method. Samples of the composite film were cut into one-inch wide stripes and tested for peel resistance of the adhesive bond using a 180-degree peel test with a crosshead separation speed of 25.4 cm per minute using an EJC Materials Tester from the Thwing-Albert Instrument Company. The sample is first allowed to cool 10 minutes after removal from the production line.. Using the strip scribe unit, three 18 cm long samples are cut to 2.5 cm width along the machine direction. The second protective layer, if present, is removed. Each strip is peeled back approximately 2.5 cm, the peeled section doubled over by folding, and the folded sections clamped in the instrument. The material is pulled apart at a rate of 25.4 cm per minute, at an angle of 180°. Three measurements are taken at different places on each sample. The mean peel adhesion is recorded in ounces of force (oz.) per 1-inch (2.54 cm) strip width. The peel strength (P) was then calculated as follows: P = [peeling load (ounces)]/[width of specimen (inches)], and converted to metric units (centi-Newtons per centimeter, cN/cm) by multiplying the force in ounce-inches by 10.95 cN/cm per 1 ounce/inch.

The degree of edge curl was determined using the following method. Edge curl (wave appearance) is determined on trimmed film products masked on both sides with protective layers. The film specimen is initially cut in half along the machine direction, wherein a 122 cm wide sample is cut into two 61 cm pieces; a 91 cm wide sample is cut into two 45 cm pieces, or a 152 cm wide sample is cut into two 76 cm pieces. The samples are laid out on flat surface, with masking side up, and any trapped air pockets are smoothed out from under the samples as much so as possible. With steel ruler, the distance the material edges bow from the flat surface is measured, at the maximum part of the wave. The sample is checked on both the left and right edges on all tests. If the sample is masked on two sides, the second protective layer (having no coating layer) is removed and the procedure is repeated. The highest measured edge curl is recorded.

The coating composition used in the preparation of examples of the composite film was prepared by combining the following components in the ratios shown in Table 1.

**Table 1.**

| Acronym | Component | CAS Number | Wt % |
|---|---|---|---|
| HDODA | Hexanediol Diacrylate | 13048-33-4 | 40.00 |
| TMPTA | Trimethylolpropane Triacrylate | 15625-89-5 | 40.00 |
| DPEPA | Dipentaerythritol Pentaacrylate | 60506-81-2 | 11.30 |
| DEAP | 2,2-Diethoxy Acetophenone | 6175-45-7 | 2.1 |
| CAB | Cellulose Acetate Butyrate | 9004-36-8 | 6.6 |
| | TOTAL | | 100 |

Examples 1-4. Laminates were prepared using bisphenol-A polycarbonate films of 250 micrometers (10 mil) and 380 micrometers (15 mil) thickness with Tru Cling^{®} clear polyethylene masking (Tredegar Corp.) applied to one side. The other, exposed face of the polycarbonate film was coated with the coating composition described in Table 1, and protected with either an applied film of GHX 173 R PE film (Example 1: 250 micrometer polycarbonate film; Example 3: 380 micrometer polycarbonate film) or GHX 174 A PE film (Example 2: 250 micrometer polycarbonate film; Example 4: 380 micrometer polycarbonate film), each of 50 micrometers (2 mil) thickness, and each from Bischof and Klein GmbH. The examples were processed by coating one face of the polycarbonate film with the coating composition to a thickness of 2 to 4 micrometers, initiating the crosslinking of the coating composition using heat and UV exposure (70°C for 30 seconds, 500 mJ/cm² exposure using a metal halide UV lamp, operating at a wavelength of about 290 to about 405 nm), and laminating all layers at a pressure of up to 0.41 MPa.

Comparative Examples 1-8. All laminates for the comparative examples were prepared using bisphenol-A polycarbonate films of 250 and 380 micrometers thickness, with a first protective layer of Tru Cling^{®} clear polyethylene masking (Tredegar Corp.) applied to one side. The other, exposed face of the polycarbonate film was coated with the coating composition described in Table 1 (above), and a second protective layer as described in Table 2 (below) laminated thereto. The films used for the second protective layer include: Tru Cling^{®} clear polyethylene masking ("Tru Cling^{®} Clear," Tredegar Corp.) for Comparative Examples 1 and 5; Tru Cling^{®} Blue polyethylene masking ("Tru Cling^{®} Blue," Tredegar Corp.) for Comparative Examples 2 and 6; GHX 173 polyethylene film ("GHX 173", Bischof and Klein) for Comparative Examples 3 and 7; and CoEx 375 polyethylene film ("CoEx 375", Novacel, Inc.) for Comparative Examples 4 and 8.

The comparative examples were processed by applying the coating composition to the polycarbonate film to a thickness of 2 to 4 micrometers, initiating the crosslinking of the coating composition using heat and UV exposure 70°C for 30 seconds, 500 mJ/cm² exposure using a metal halide UV lamp operating at a wavelength of about 290 to about 405 nm, and laminating all layers together by applying pressures up to 0.41 MPa (60 psi).

Curl measurements. The laminates were measured for baseline curl with (initial 2S mask, Table 2) the first protective layer of Tru Cling^{®} clear polyethylene film present. The first protective layer was then removed, and the baseline curl was re-measured (initial 1S mask, Table 2). The laminates without the first protective layer were then processed additionally using one of two scenarios. In Scenario 1, the laminates were processed thermally, at 65°C for 30 minutes, 90°C for 4 minutes and 65°C for 120 minutes, with about 15 minutes of cooling to room temperature between each temperature. In Scenario 2, a combination of thermal and UV treatments was used on the laminates, at 65 to 70°C for 6 minutes, and 90°C for 4 minutes with about 15 minutes of cooling between stages, and 500 mJ/cm² exposure using a metal halide UV lamp operating at a wavelength of about 290 to about 405 nm. The results of the curl tests are shown in Table 2, below.

Peel strength measurements. The laminates without the first protective layer present (initial 1S mask, Table 2) were measured for initial peel strength at room temperature. These laminates were. In scenario 1, the laminates were processed thermally, at 65°C for 30 minutes, 90°C for 4 minutes and 65°C for 120 minutes, with about 15 minutes of cooling to room temperature between each temperature.. In scenario 2, a combination of thermal and UV treatments was used on the laminates, at 65 to 70°C for 6 minutes, and 90°C for 4 minutes with about 15 minutes cooling to room temperature between temperatures, and 500 mJ/cm² exposure using a metal halide UV lamp operating at a wavelength of about 290 to about 405 nm. The results of the curl tests are shown in Table 2, below.

**Table 2.**

| Ex. No. | Conditions | PC film Gauge (µm) | Curl (cm)* | | | | Pull Peel (cN/cm)** | | |
|---|---|---|---|---|---|---|---|---|---|
| | | | Initial 2S Mask | Initial 1S Mask | Scenario 1 | Scenario 2 | Initial 1S Mask | Scenario 1 | Scenario 2 |
| Comp1 | Tru Cling® Clear PE | 380 | 0.28 | 0.03 | 0.48 | 0.58 | 0.66 | 0.66 | 0.66 |
| Comp2 | Tru Cling® Blue PE | 380 | 0.33 | 0.08 | 0.51 | 0.48 | 0.66 | 0.88 | 0.66 |
| Comp3 | GHX 173 | 380 | 0.25 | 0 | 0.25 | 0.74 | 0.99 | 0.44 | 0.55 |
| Ex. 1 | GHX 173 R | 380 | 0.08 | 0 | 0.74 | 0.66 | 17.1 | 11.1 | 14.8 |
| Ex. 2 | GHX 174 A | 380 | 0 | 0 | 0.58 | 0.63 | 5.03 | 4.41 | 5.35 |
| Comp. 4 | CoEx 375 | 380 | 0 | 0 | 2.26 | 2.03 | 6.46 | 37.9 | 98.5 |
| Comp. 5 | Tru Cling® Clear PE | 250 | 0.13 | 0 | 1.47 | 1.19 | 0.66 | 0.66 | 0.66 |
| Comp. 6 | Tru Cling® Blue PE | 250 | 0.10 | 0.05 | 1.55 | 1.42 | 0.88 | 0.55 | 0.88 |
| Comp. 7 | GHX 173 | 250 | 0.05 | 0 | 2.41 | 2.57 | 0.99 | 0.66 | 0.66 |
| Ex 3 | GHX 173 R | 250 | 0 | 0 | 2.41 | 2.34 | 3.61 | 2.52 | 3.51 |
| Ex 4 | GHX 174 A | 250 | 0 | 0 | 2.37 | 2.41 | 4.93 | 5.40 | 5.90 |
| Comp 8 | CoEx 375 | 250 | 0 | 0 | 3.07 | 3.66 | 4.71 | 30.9 | 45.0 |

| | | | | | | | | | |
|---|---|---|---|---|---|---|---|---|---|
| *Curl measurements represent averaged values of a set of replicates. For curl measurements for each initial mask 2S and 1S, no. of replicates n = 3; For curl data after exposure by Scenarios 1 and 2, n = 21, except for Comparative Examples 4 and 8, where n =10. **Peel strength measurements represent values of a set of replicates. For both initial peel strength measurement and for peel strength after Scenarios 1 and 2, n = 6. | | | | | | | | | |

Evaluation of the laminates above using at both 250 and 380 micrometer (10 and 15 mil) thickness of the PC substrates for curl showed the lowest curl is generally obtained with the thicker film (Examples 1 and 2, and Comparative Examples 1-4). Of these, there is less variation in curl when the Scenario 2 cure is used. The lowest overall curl is seen in the Comparative Examples 1-3, 5, and 6; an intermediate amount of curl for Comparative Examples 3, 7, and Examples 1-4; and significant curl for Comparative Examples 4 and 8. Of Examples 1-4, the best curl performance (at a PC film thickness of 380 micrometers) is obtained with GHX 174 A (Example 2). In this test, Comparative Examples 4 and 8, which represent the current manufacturing process and materials set, showed significant curl across the two manufacturing scenarios.

Peel strength evaluation of Examples 1-4 showed consistent, desirable values, across both manufacturing scenarios 1 and 2. For 380 micrometer thick polycarbonate film, the peel strength values for both scenarios 1 and 2 for the GHX 173 R film (Example 1) are higher than the corresponding peel strength values for GHX 174 A film (Example 2). For 250 micrometer thick polycarbonate film however, the peel strength values for both scenarios 1 and 2 for the GHX 173 R film (Example 3) are lower than the corresponding peel strength values for GHX 174 A film (Example 2). As seen in the above data, GHX 174 A film showed greater consistency in peel strength values for both polycarbonate film thicknesses tested (380 and 250 micrometers thickness, with an overall range of 4.41 to 5.90 cN/cm for both thicknesses) than did the GHX 173 R film, which showed a higher range of peel strengths in combination with the 380 micrometer thick polycarbonate film (11.1 to 17.1 cN/cm), and a lower range of peel strengths in combination with the 250 micrometer thick polycarbonate film (2.52 to 3.61 cN/cm).

Both Scenarios 1 and 2 gave useful peel strengths for both GHX 173 R and GHX 174 A films. For the GHX 173 R films, thermal treatment alone (Scenario 1, Table 2) showed a loss of peel strength of 35% for Example 1, and a loss of peel strength of 30% for Example 2. UV and thermal treatment (Scenario 2) showed loss of peel strength of 13.5% for Example 1 and loss of peel strength of 2.8% for Example 2. For the GHX 174 A films, thermal treatment alone (Scenario 1, Table 2) showed a loss of peel strength of 12.3% for Example 2, and an increase in peel strength of 9.5% for Example 4. Also for GHX 174 A films, UV and thermal treatment (Scenario 2) showed increases in peel strength of 6.4% for Example 2 and 19.7% for Example 4.

By comparison, Comparative Examples 1-3 and 5-7 showed relatively consistent but low peel strength below a useful value, and hence low adhesion across both manufacturing Scenarios 1 and 2 during treatment. This resulted in adhesion failure by delamination, which in turn gave an unacceptable damaged product, low product quality, low process yields and jamming of processing and handling equipment. Comparative Examples 4 and 8, showed an opposite trend, having too high an adhesion level which is magnified by exposure to thermal ovens and in particular UV irradiation. Peel strength for Comparative Example 4 increased by 586% when processed under Scenario 1, and increased by 1,525% when processed under Scenario 2. Similarly, peel strength for Comparative Example 8 increased by 656% when processed under scenario 1, and increased by 956% when processed under scenario 2, making manual removal of the protective film difficult without damaging the polycarbonate printed substrate or the use of a cleaning solvent.

Compounds are described herein using standard nomenclature. A dash ("-") that is not between two letters or symbols is used to indicate a point of attachment for a substituent. For example, -CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another.

## Claims

1. A composite film comprising
a protective layer comprising an adhesion-modified polyolefin film;
a coating layer comprising the reaction product of
a crosslinkable compound comprising a combination of difunctional; trifunctional; and tetrafunctional, pentafunctional, or tetrafunctional and pentafunctional (meth)acrylate crosslinkable compounds, wherein the difunctional crosslinkable compound is present in an amount of 20 to 60 wt%; the trifunctional crosslinkable compound is present in an amount of 20 to 60 wt%; the tetrafunctional, pentafunctional, or combination of tetrafunctional and pentafunctional crosslinkable compounds are present in a total amount of 12 to 30 wt%,
an initiator present in an amount of 0.01 to 10 wt%, and
a binder present in an amount of 1 to 25 wt%;
wherein the amounts of each of these is based on the total weight of the crosslinkable compound, the initiator, and the binder, and
a polycarbonate layer;
wherein the coating layer is disposed between the protective layer and the polycarbonate layer, and wherein the peel strength between the protective layer and the polycarbonate layer, as measured both before and after thermal treatment or a combination of thermal and UV treatment of the composite film, is 1 to 20 centi-Newtons per centimeter measured using 180° angle peel measured at a peel rate of 25.4 cm/min.

2. The composite film of claim 1, wherein the adhesion-modified polyolefin comprises a copolymer of a C₂₋₁₈ olefin and an adhesion-promoting monomer.

3. The composite film of claim 2, wherein the adhesion-promoting monomer is an ethylenically unsaturated ester.

4. The composite film of claim 3 wherein the adhesion-modified polyolefin comprises an adhesion-modified polyethylene.

5. The composite film of claim 1 wherein the initiator is a photoinitiator, a chemical initiator, thermal initiator, or a combination comprising at least one of the foregoing initiators.

6. The composite film of claim 1 wherein the binder is a modified polysaccharide, modified cellulose, or a combination of these.

7. The composite film of claim 1 wherein the polycarbonate layer comprises bisphenol-A polycarbonate.

8. The composite film of claim 1 wherein the protective layer further comprises a second film disposed on a surface of the adhesion modified polyolefin film opposite the coating layer.

9. The composite film of claim 8 wherein the second film comprises an unmodified polyolefin.

10. The composite film of claim 9 wherein the adhesion modified polyolefin film and second film are coextruded.

11. The composite film of claim 1 wherein a second protective layer is adhered to the face of the polycarbonate film opposite the coating layer.

12. The composite film of claim 1 wherein the thermal treatment comprises exposure to about 90°C for greater than or equal to about 4 minutes.

13. The composite film of claim 1 wherein the UV treatment comprises exposure of the composite film to ultraviolet radiation at a wavelength of 290 to 405 nm, and at a dose of greater than or equal to 500 millijoules per square centimeter.

14. The composite film of claim 1 wherein
the crosslinkable compound is a polyfunctional (meth)acryloyl compound comprising N, N-bis(2-hydroxyethyl)(meth)acrylamide, methylenebis((meth)acrylamide), 1,6-hexamethylenebis((meth)acrylamide), diethylenetriamine tris((meth)acrylamide), bis(gamma-((meth)acrylamide)propoxy) ethane, beta-((meth)acrylamide) ethylacrylate, ethylene glycol di(meth)acrylate, diethylene glycol di(meth)acrylate, tetraethylene glycol di(meth)acrylate, glycerol di(meth)acrylate, glycerol tri(meth)acrylate, 1,3-propylene glycol di(meth)acrylate, dipropyleneglycol di(meth)acrylate, 1,4-butanediol di(meth)acrylate, 1,2,4-butanetriol tri(meth)acrylate, 1,6-hexanedioldi(meth)acrylate, 1,4-cyclohexanediol di(meth)acrylate, 1,4-benzenediol di(meth)acrylate, pentaerythritoltetra(meth)acrylate, 1,5-pentanediol di(meth)acrylate, 1,8-octanediol diacrylate, 1,9-nonanediol di(meth)acrylate, 1,10-decanediol di(meth)acrylate, 1,11-undecanediol di(meth)acrylate, 1,12-dodecanediol di(meth)acrylate, pentaerythritol tri(meth)acrylate, pentaerythritol tetra(meth)acrylate, dipentaerythritol tetra(meth)acrylate, dipentaerythritol penta(meth)acrylate, diethylene glycol di(meth)acrylate, triethylene glycol di(meth)acrylate, trimethylolpropane di(meth)acrylate, trimethylolpropane tri(meth)acrylate), 1,3,5-triacryloylhexahydro-1,3,5-triazine, 2,2-bis(4-(2-(meth)acryloxyethoxy)phenyl)propane, 2,2-bis(4-(2-(meth)acryloxyethoxy)-3,5-dibromophenyl)propane, 2,2-bis((4-(meth)acryloxy)phenyl)propane, 2,2-bis((4-(meth)acryloxy)-3,5-dibromophenyl)propane, or combinations comprising at least one of the foregoing polyfunctional (meth)acryloyl monomers,
the initiator is a photoinitiator or thermal initiator, wherein the photoinitiator is a phosphine oxide photoinitiator, hydroxyalkyl phenyl ketone photoinitiator, alkoxyalkyl phenyl ketone photoinitiator, thioalkylphenyl morpholinoalkyl ketone photoinitiator, benzoin ether photoinitiator, or combinations of the foregoing photoinitiators; and the thermal initiator is a peroxy initiator comprising benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy) isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilylphenyltriphenylsilyl peroxide, or a combination comprising at least one of the foregoing, and
the binder is an ester-modified binder materials comprising cellulose acetate or cellulose acetate butyrate, and wherein the thermal treatment comprises exposure to 90ºC for greater than or equal to 4 minutes and wherein the UV treatment comprises exposure of the composite film to ultraviolet radiation at a wavelength of 290 to 405 nm and at a dose of greater than or equal to 500 millijoules per square centimeter.

15. A method of forming a composite film comprising
curing a coating composition comprising
a crosslinkable compound comprising a combination of difunctional; trifunctional; and tetrafunctional, pentafunctional, or tetrafunctional and pentafunctional (meth)acrylate crosslinkable compounds, wherein the difunctional crosslinkable compound is present in an amount of 20 to 60 wt%; the trifunctional crosslinkable compound is present in an amount of 20 to 60 wt%; the tetrafunctional, pentafunctional, or combination of tetrafunctional and pentafunctional crosslinkable compounds are present in a total amount of 12 to 30 wt%,
an initiator present in an amount of 0.01 to 10 wt%, and
a binder present in an amount of 1 to 25 wt%,
wherein the amounts of each of these is based on the total weight of the crosslinkable compound, the initiator, and the binder, and wherein the coating composition is disposed between a protective film comprising an adhesion modified polyolefin, and a polycarbonate film, and
treating the composite film by a thermal treatment or a combination of thermal and UV treatment,
wherein the composite film has a peel strength between the protective layer and the coating layer, as measured both before and after thermal treatment or a combination of thermal and UV treatment of the composite film, of 1 to 20 centi-Newtons per centimeter measured using 180° angle peel pull at a peel rate of 25.4 cm/min.

16. The method of claim 15 wherein the coating composition is partially cured prior to disposing between the protective film and the polycarbonate film.

17. The method of claim 15, wherein the curing is by laminating, rolling, pressing, heating, exposing to radiation, or a combination of one or more of these.

18. The composite film formed by the method of claim 15.

19. An article comprising the composite film of claim 1.

## Patentansprüche

1. Verbundfilm umfassend
eine Schutzschicht mit einem adhäsionsmodifizierten Polyolefin-Film;
eine Deckschicht mit dem Reaktionsprodukt aus
einer vernetzbaren Verbindung umfassend eine Kombination difunktionaler; trifunktionaler; und tetrafunktionaler, pentafunktionaler, oder tetrafunktionaler und pentafunktionaler (Meth)Acrylat vernetzbarer Verbindungen, wobei die difunktionale vernetzbare Verbindung in einer Menge von 20 - 60 Gew.-% vorliegt; die trifunktionale vernetzbare Verbindung in einer Menge von 20 - 60 Gew.-% vorliegt; die tetrafunktionale, pentafunktionale, oder die Kombination aus tetrafunktionalen und pentafunktionalen vernetzbaren Verbindungen in einer Gesamtmenge von 12 - 30 Gew.-% vorliegt,
ein Initiator vorliegend in einer Menge von 0,01 bis 10 Gew.-%, und
ein Bindemittel vorliegend in einer Menge von 1 - 25 Gew.-%;
wobei die Mengen eines/einer jeden der vorgenannten auf dem Gesamtgewicht der vernetzbaren Verbindung, des Initiators, und des Bindemittels basiert, und
eine Polycarbonatschicht;
wobei die Deckschicht zwischen der Schutzschicht und der Polycarbonatschicht angeordnet ist, und wobei die Haftfestigkeit zwischen der Schutzschicht und der Polycarbonatschicht, gemessen sowohl vor als auch nach einer thermischen Behandlung oder einer Kombination aus thermischer und UV-Behandlung des Verbundfilms, 1 - 20 centi-Newton pro Zentimeter beträgt gemessen unter Verwendung eines 180°Grad Ablösewinkels gemessen bei einer Ablöserate von 25,4 cm/min.

2. Verbundfilm nach Anspruch 1, wobei das adhäsionsmodifizierte Polyolefin ein Copolymer aus einem C₂₋₁₈ Olefin und einem adhäsions-befördernden Monomer umfasst.

3. Verbundfilm nach Anspruch 2, wobei das adhäsionsbefördernde Monomer ein ethylensicher ungesättigter Ester ist.

4. Verbundfilm nach Anspruch 3, wobei das adhäsionsmodifizierte Polyolefin ein adhäsionsmodifiziertes Polyethylen umfasst.

5. Verbundfilm nach Anspruch 1, wobei der Initiator ein Photoinitiator, ein chemischer Initiator, ein thermischer Initiator oder eine Kombination mit wenigstens einen der vorgenannten Initiatoren ist.

6. Verbundfilm nach Anspruch 1, wobei das Bindemittel ein modifiziertes Polysaccharid, modifierte Zellulose oder eine Kombination davon ist.

7. Verbundfilm nach Anspruch 1, wobei die Polycarbonatschicht ein Bisphenol-A Polycarbonat umfasst.

8. Verbundfilm nach Anspruch 1, wobei die Schutzschicht ferner einen zweiten Film umfasst, der auf einer Oberfläche des adhäsionsmodifizierten Polyolefinfilms gegenüber der Deckschicht angeordnet ist.

9. Verbundfilm nach Anspruch 8, wobei der zweite Film ein unmodifiziertes Polyolefin umfasst.

10. Verbundfilm nach Anspruch 9, wobei der adhäsionslmodifizierte Polyolefinfilm und der zweite Film koextrudiert sind.

11. Verbundfilm nach Anspruch 1, wobei eine zweite Schutzschicht an der gegenüber der Deckschicht angeordneten Fläche des Polycarbonatfilms anhaftet.

12. Verbundfilm nach Anspruch 1, wobei die thermische Behandlung eine Einwirkung von ungefähr 90°C für annäherend 4 Minuten oder mehr umfasst.

13. Verbundfilm nach Anspruch 1, wobei die UV-Behandlung eine Einwirkung ultravioletter Strahlung bei einer Wellenlänge von 290 - 405 nm und einer Energiedichte von 500 Millijoule pro Quadratzentimeter oder mehr auf den Verbundfilm umfasst.

14. Verbundfilm nach Anspruch 1, wobei
die vernetzbare Verbindung eine polyfunktionale (Meth)Acryloyl-Verbindung umfassend
N,N-bis(2-Hydroxyethyl)(meth)acrylamid,
Methylenbis((Meth)Acrylamid),
1,6-Hexamethylenbis((meth)acrylamid),
Diethylentriamintris((meth)acrylamid),
Bis(gamma-((meth)acrylamid)propoxy)ethan,
Beta-((meth)acrylamid)ethylacrylat,
Ethylenglycoldi(meth)acrylat,
Diethylenglycoldi(meth)acrylat,
Tetraethylenglycoldi(meth)acrylat,
Glyceroldi(meth)acrylat, Glyceroltri(meth)acrylat,
1,3-Propylenglycoldi(meth)acrylat,
Dipropylenglycoldi(meth)acrylat,
1,4-Butandioldi(meth)acrylat,
1,2,4-Butantrioltri(meth)acrylat,
1,6-Hexandioldi(meth)acrylat,
1,4-Cyclohexandioldi(meth)acrylat,
1,4-Benzoldioldi(meth)acrylat,
Pentaerythritoltetra(meth)acrylat,
1,5-Pentandioldi(meth)acrylat,
1,8-Octandioldiacrylat,
1,9-Nonandioldi(meth)acrylat,
1,10-Decandioldi(meth)acrylat,
1,11-Undecandioldi(meth)acrylat,
1,12-Dodecandioldi(meth)acrylat,
Pentaerythritoltri(meth)acrylat,
Pentaerythritoltetra(meth)acrylat,
Dipentaerythritoltetra(meth)acrylat,
Dipentaerythritolpenta(meth)acrylat,
Diethylenglycoldi(meth)acrylat,
Triethylenglycoldi(meth)acrylat,
Trimethylolpropandi(meth)acrylat,
Trimethylolpropantri(meth)acrylat),
1,3,5-Triacryloylhexahydro-1,3,5-triazine,
2,2-Bis(4-(2-(meth)acryloxyethoxy)phenyl)propan,
2,2-Bis(4-(2-(meth)acryloxyethoxy)-3,5-dibromophenyl)propan,
2,2-Bis((4-(meth)acryloxy)phenyl)propan,
2,2-Bis((4-(meth)acryloxy)-3,5-dibromophenyl)propan, oder
Kombinationen umfassend wenigstens eine der vorgenannten polyfunktionalen (Meth)acryloylmonomere,
der Initiator ein Photoinitiator oder ein thermischer Initiator ist, wobei der Photoinitiator ein Phosphinoxid-Photoinitiator, Hydroxyalkylphenylketon-Photoinitiator, Alkoxyalkylphenylketon- Photoinitiator, Thioalkylphenylmorpholinoalkylketon-Photoinitiator, Benzoinether-Photoinitiator, oder Kombinationen der vorgenannten Photoinitiatoren ist; und der thermische Initiator ein Peroxy-Initiator umfassend Benzoylperoxid, Dicumylperoxid, Methylethylketonperoxid, Laurylperoxid, Cyclohexanonperoxid, t-Butylhydroperoxid, t-Butylbenzolhydroperoxid, t-Butylperoctoat, 2,5-Dimethylhexan-2,5-dihydroperoxid, 2,5-Dimethyl-2,5-Di(t-butylperoxy)-hex-3-yn, Di-t-butylperoxid, t-Butylcumylperoxid, Alpha,alpha'-bis(t-butylperoxy-m-isopropyl)benzol, 2,5-Dimethyl-2,5-di(t-butylperoxy)hexan, Dicumylperoxid, Di(t-butylperoxy)isophthalat, t-Butylperoxybenzoat, 2,2-Bis(t-butylperoxy)butan, 2,2-Bis(t-butylperoxy)octan, 2,5-Dimethyl-2,5-di(benzoylperoxy)hexan, Di(trimethylsilyl)peroxid, Trimethylsilylphenyltriphenylsilylperoxid, oder eine Kombination umfassend zumindest eine der vorgenannten, und
das Bindemittel ein Ester-modifiziertes Bindemittel umfassend Zelluloseacetat oder Zelluloseacetatbutyrat ist, und wobei die thermische Behandlung eine Einwirkung von 90°C für 4 Minuten oder mehr umfasst und wobei die UV-Behandlung eine Einwirkung mit ultravioletter Strahlung bei einer Wellenlänge von 290 - 405 nm und einer Energiedichte von 500 Millijoule pro Quadratzentimeter oder mehr auf den Verbundfilm umfasst.

15. Verfahren zur Herstellung eines Verbundfilms umfassend
Aushärtung einer Deckschichtzusammensetzung umfassend
eine vernetzbare Verbindung umfassend eine Kombination difuktionaler; trifunktionaler; und tetrafunktionaler, pentafunktionaler, oder tetrafunktionaler und pentafunktionaler (Meth)acrylat-vernetzbarer Verbindungen, wobei die difunktionale vernetzbare Verbindung in einer Menge von 20 - 60 Gew.-% vorliegt; die trifunktionale vernetzbare Verbindung in einer Menge von 20 - 60 Gew.-% vorliegt; die tetrafunktionale, pentafunktionale, oder Kombinationen aus tetrafunktionaler und pentafunktionaler vernetzbarer Verbindungen in einer Gesamtmenge von 12 - 30 Gew.-% vorliegt,
einen Initiator in einer Menge von 0,01 - 10 Gew.-% und
ein Bindemittel in einer Menge von 1 - 25 Gew.-%,
wobei die Menge einer jeden der vorgenannten auf dem Gesamtgewicht der vernetzbaren Verbindung, des Initiators und des Bindemittels basiert, und wobei die Deckschichtzusammensetzung zwischen einem Schutzfilm mit einem adhäsionsmodifizierten Polyolefin und einem Polycarbonatfilm angeordnet ist, und
Behandeln des Verbundfilms mittels thermischer Behandlung oder einer Kombination aus thermischer und UV-Behandlung,
wobei der Verbundfilm eine Haftfestigkeit zwischen dem Schutzfilm und der Deckschicht, gemessen sowohl vor als auch nach der thermischen Behandlung oder der Kombination aus thermischer oder UV-Behandlung des Verbundfilms, von 1 - 20 centi-Newton pro Zentimeter gemessen unter Verwendung eines 180°Grad Ablösung bei einer Ablöserate von 25,4 cm/min.

16. Verfahren nach Anspruch 15, wobei die Deckschichtzusammensetzung vor dem Anordnen zwischen den Schutzfilm und den Polycarbonatfilm teilweise ausgehärtet wird.

17. Verfahren nach Anspruch 15, wobei das Aushärten durch Laminieren, Walzen, Pressen, Aufheizen, Strahlungseinwirkung, oder eine Kombination einer oder mehrerer der vorgenannten durchgeführt wird.

18. Verbundfilm hergestellt durch ein Verfahren nach Anspruch 15.

19. Gegenstand mit einem Verbundfilm nach Anspruch 1.

## Revendications

1. Film composite comprenant
une couche de protection comprenant un film de polyoléfine modifié en adhérence ;
une couche de revêtement comprenant le produit de réaction de :
- un composé réticulable comprenant une combinaison de composés réticulables de (méth)acrylate difonctionnel, trifonctionnel, et tétrafonctionnel, pentafonctionnel ou tétrafonctionnel et pentafonctionnel, dans lequel le composé réticulable difonctionnel est présent dans une quantité de 20 à 60 % en poids, le composé réticulable trifonctionnel est présent dans une quantité de 20 à 60 % en poids, les composés tétrafonctionnels, pentafonctionnels ou une combinaison desdits composés tétrafonctionnels et pentafonctionnels sont présents dans une quantité totale de 12 à 30 % en poids.
- un amorceur présent dans une quantité de 0,01 à 10 % en poids, et
- un liant présent dans une quantité de 1 à 25 % en poids ;
dans lequel les quantités de chacun de ceux-ci sont basées sur le poids total du composé réticulable, de l'amorceur, et du liant, et
une couche de polycarbonate ;
dans lequel la couche de revêtement est disposée entre la couche de protection et la couche de polycarbonate et dans lequel la résistance au pelage entre la couche de protection et la couche de polycarbonate, telle que mesurée à la fois avant et après le traitement thermique ou une combinaison d'un traitement thermique et d'un traitement aux UV du film composite, est de 1 à 20 centi-Newtons par centimètre, mesurés en utilisant un pelage selon un angle de 180° à une vitesse de pelage de 25,4 cm/min.

2. Film composite selon la revendication 1, dans lequel la polyoléfine modifiée en adhérence comprend un copolymère d'oléfine en C₂₋₁₈ et un monomère promoteur d'adhérence.

3. Film composite selon la revendication 2, dans lequel le monomère promoteur d'adhérence est un ester éthyléniquement insaturé.

4. Film composite selon la revendication 3, dans lequel la polyoléfine modifiée en adhérence comprend un polyéthylène modifié en adhérence.

5. Film composite selon la revendication 1, dans lequel l'amorceur est un photo-amorceur, un amorceur chimique, un amorceur thermique, ou une combinaison comprenant au moins un des amorceurs précédents.

6. Film composite selon la revendication 1, dans lequel le liant est un polysaccharide modifié, une cellulose modifiée ou une combinaison de ceux-ci.

7. Film composite selon la revendication 1, dans lequel la couche de polycarbonate comprend du polycarbonate de bisphénol A

8. Film composite selon la revendication 1, dans lequel la couche de protection comprend en outre un second film disposé sur une surface du film de polyoléfine modifiée en adhérence, opposée à la couche de revêtement.

9. Film composite selon la revendication 8, dans lequel le second film comprend une polyoléfine non modifiée.

10. Film composite selon la revendication 9, dans lequel le film de polyoléfine modifiée en adhérence et le second film sont co-extrudés.

11. Film composite selon la revendication 1, dans lequel une seconde couche de protection adhère à la face du film de polycarbonate opposée à la couche de revêtement.

12. Film composite selon la revendication 1, dans lequel le traitement thermique comprend une exposition à environ 90 °C pendant une durée égale ou supérieure à environ 4 minutes.

13. Film composite selon la revendication 1, dans lequel le traitement UV comprend l'exposition du film composite aux rayonnements ultraviolets à une longueur d'onde de 290 à 405 nm, et à une dose supérieure ou égale à 500 millijoules par centimètre carré.

14. Film composite selon la revendication 1, dans lequel
le composé réticulable est un composé de (méth)acryloyle polyfonctionnel comprenant du N,N-bis(2-hydroxyéthyl)(méth)acrylamide, du méthylènebis((méth)acrylamide), du 1,6-hexaméthylènebis((méth)acrylamide), du diéthylènetriamine tris((méth)acrylamide), du bis(gamma-((méth)acrylamide)propoxy) éthane, du bêta-((méth)acrylamide) éthylacrylate, du di(méth)acrylate d'éthylène glycol, du di(méth)acrylate de diéthylène glycol, du di(méth)acrylate de tétraéthylène glycol, du di(méth)acrylate de glycérol, du tri(méth)acrylate de glycérol, du di(méth)acrylate de 1,3-propylène glycol, du di(méth)acrylate de dipropylèneglycol, du di(méth)acrylate de 1,4-butanediol, du tri(méth)acrylate de 1,2,4-butanediol, du 1,6-hexanedioldi(méth)acrylate, du di(méth)acrylate de 1,4-cyclohexanediol, du di(méth)acrylate de 1,4-benzènediol, du pentaérythritoltétra(méth)acrylate, du di(méth)acrylate de 1,5-pentanediol, du diacrylate de 1,8-octanediol, du di(méth)acrylate de 1,9-nonanediol, du di(méth)acrylate de 1,10-décanediol, du di(méth)acrylate de 1,11-undécanediol, du di(méth)acrylate de 1,12-dodécanediol, du tri(méth)acrylate de pentaérythritol, du tétra(méth)acrylate de pentaérythritol, du tétra(méth)acrylate de dipentaérythritol, du penta(méth)acrylate de dipentaérythritol, du di(méth)acrylate de diéthylène glycol, du di(méth)acrylate de triéthylène glycol, du di(méth)acrylate de triméthylolpropane, du tri(méth)acrylate de triméthylolpropane, de la 1,3,5-triacryloylhexahydro-1,3,5-triazine, du 2,2-bis(4-(2-(méth)acryloxyéthoxy)phényl)propane, du 2,2-bis-(4-(2-(méth)acryloxyéthoxy)-3,5-dibromophényl)propane, du 2,2-bis((4-(méth)acryloxy)phényl)propane, du 2,2-bis((4-(méth)acryloxy)-3,5-dibromophényl)propane ou des combinaisons comprenant au moins un des monomères de (méth)acryloyle polyfonctionnels ci-dessus,
l'amorceur est un amorceur photochimique ou un amorceur thermique, dans lequel l'amorceur photochimique est un amorceur photochimique d'oxyde de phosphine, un amorceur photochimique d'hydroxyalkyl-phényl-cétone, un amorceur photochimique d'alcoxyalkyl-phényl-cétone, un amorceur photochimique de thioalkylphényl-morpholinoalkyl-cétone, un amorceur photochimique d'éther de benzoïne, ou des combinaisons des amorceurs photochimiques précédents ; et l'amorceur thermique est un amorceur peroxy comprenant du peroxyde de benzoyle, du peroxyde de dicumyle, du peroxyde de méthyléthylcétone, du peroxyde de lauryle, du peroxyde de cyclohexanone, de l'hydroperoxyde de t-butyle, de l'hydroperoxyde de t-butyl-benzène, du peroctoate de t-butyle, du dihydroperoxyde de 2,5-diméthylhexane-2,5-dihydroperoxyde, du 2,5-diméthyl-2,5-di(t-butylperoxy)-hex-3-yne, du di-t-butylperoxyde, du peroxyde de t-butylcumyle, de l'alpha-alpha'-bis(t-butylperoxy-m-isopropyl)benzène, du 2,5-diéthyl-2,5-di(t-butylperoxy)hexane, du dicumylperoxyde, du di(t-butylperoxy) isophtalate, du t-butylperoxybenzoate, du 2,2-bis(t-butylperoxy)butane, du 2,2-bis(t-butylperoxy)octane, du 2,5-diméthyl-2,5-di(benzoylperoxy)hexane, du di(triméthylsilyl)peroxyde, du peroxyde de triméthylsilylphényltriphénylsilyle ou une combinaison comprenant au moins un élément parmi les précédents, et
le liant est un matériau liant modifié en ester comprenant de l'acétate de cellulose ou du butyrate d'acétate de cellulose et dans lequel le traitement thermique comprend l'exposition à 90 °C pendant une durée supérieure ou égale à 4 minutes et dans lequel le traitement aux UV comprend l'exposition du film composite aux rayons ultraviolets à une longueur d'onde de 290 à 405 nm et à une dose supérieure ou égale à 500 millijoules par centimètre carré.

15. Procédé de formation d'un film composite comprenant
le durcissement d'une composition de revêtement comprenant
un composé réticulable comprenant une combinaison de composés réticulables de (méth)acrylate difonctionnel, trifonctionnel, et tétrafonctionnel, pentafonctionnel ou tétrafonctionnel et pentafonctionnel, dans lequel le composé réticulable difonctionnel est présent dans une quantité de 20 à 60 % en poids, le composé réticulable trifonctionnel est présent dans une quantité de 20 à 60 % en poids, les composés tétrafonctionnels, pentafonctionnels ou une combinaison desdits composés tétrafonctionnels et pentafonctionnels sont présents dans une quantité totale de 12 à 30 % en poids.
un amorceur présent dans une quantité de 0,01 à 10 % en poids, et
un liant présent dans une quantité de 1 à 25 % en poids ;
dans lequel les quantités de chacun de ceux-ci sont basées sur le poids total du composé réticulable, de l'amorceur, et du liant, et dans lequel la composition de revêtement est disposée entre un film de protection comprenant une polyoléfine modifiée en adhérence et un film de polycarbonate, et
le traitement du film composite par un traitement thermique ou une combinaison d'un traitement thermique et d'un traitement aux UV
dans lequel le film composite a une résistance au pelage entre la couche de protection et la couche de revêtement, telle que mesurée à la fois avant et après le traitement thermique ou une combinaison de traitement thermique et de traitement UV du film composite, de 1 à 20 centi-Newtons par centimètre, mesurés en utilisant un pelage selon un angle de 180° à une vitesse de pelage de 25,4 cm/min.

16. Procédé selon la revendication 15, dans lequel la composition de revêtement est partiellement durcie avant d'être placée entre le film de protection et le film de polycarbonate.

17. Procédé selon la revendication 15, dans lequel le durcissement se fait par couchage, laminage, compression, chauffage, exposition au rayonnement ou une combinaison d'une ou plusieurs de ces méthodes.

18. Film composite formé selon le procédé de la revendication 15.

19. Article comprenant le film composite selon la revendication 1.
